# EUROPEAN PATENT APPLICATION

(11) **EP 3 404 540 A1**
(43) Date of publication of application: **21.11.2018**
(21) Application number: 17746943.4
(22) Date of filing: 25.01.2017
(51) Int. Cl.: G06F 9/50

(54) **DATA STREAM PROCESSING METHOD, APPARATUS, AND SYSTEM**

(30) Priority: 05.02.2016 CN 201610082701; 02.11.2016 CN 201610946437
(71) Applicant: Huawei Technologies Co., Ltd., Longgang District Shenzhen, Guangdong 518129 (CN)
(72) Inventor: GAO, Xiong, Shenzhen Guangdong 518129 (CN); WU, Jie, Shenzhen Guangdong 518129 (CN); LI, Baosong, Shenzhen Guangdong 518129 (CN)
(74) Representative: Goddar, Heinz J.
(86) International application number: PCT/CN2017/072644
(87) International publication number: WO 2017/133623

(57) **Abstract**

Embodiments of the present invention provide a data flow processing method and apparatus, and a system. A processing process performed on a packet is divided into multiple processing actions. Some processing actions are spread only when traffic of a current data flow meets a preset condition. Therefore, multiple processor cores may process a packet in a pipeline manner, so as to improve processing efficiency. When a bandwidth fluctuation amplitude of a data flow is relatively large and a peek bandwidth of the data flow is relatively large, compared with a static pipeline manner, the method provided in the embodiments of present invention avoids a waste of processing resources to some extent when traffic is relatively low, and can also better support data flow processing when traffic is relatively high.

## Description

### TECHNICAL FIELD

The present invention relates to computer technologies, and in particular, to a method for data flow processing on a multi-core computer, and to an apparatus and a system to which the method is applied.

### BACKGROUND

As network technologies develop, communication traffic presents two new significant features. One is that a peak traffic bandwidth of a single-user data flow is increasingly high, and the other is that a bandwidth fluctuation amplitude of a single-user data flow is increasingly large. The two features of the communication traffic inevitably pose a higher requirement on a processing capability of a network device.

A gateway is used as an example. An existing gateway cannot well adapt to the two new features of the communication traffic. A gateway is also referred to as an inter-network connector or a protocol converter, and is a network device configured to implement communication and interconnection between networks of different architectures. To implement high-performance data traffic processing, the gateway generally includes a control plane (control plane) and a forwarding plane (forwarding plane) in terms of internal logic. The control plane controls and manages forwarding of a data flow. The forwarding plane (or referred to as a data plane) is managed by the control plane to forward the data flow. In terms of physical deployment, the control plane and the forwarding plane are generally deployed on different processor cores or different processors. To enhance a forwarding capability, the forwarding plane is generally a multi-core processor.

Currently, there are two mainstream forwarding technologies. One is that data flows of different users are allocated to different processor cores for processing. The other is a static pipeline technology in which a forwarding process is divided into multiple processing actions according to a function, the multiple processing actions are statically bound to multiple different processor cores, and each processor core transfers, by using a queue, a packet to a next processor core after performing a corresponding processing action on the packet. In the former, a forwarding process of a single-user data flow is centrally completed by one processor core, and as a result, a peak bandwidth of a single-user data flow is severely limited by a processing capability of a single core. In the latter, due to static binding, processor core resources need to be reserved according to a peak bandwidth. However, because a bandwidth fluctuation amplitude of communication traffic is large, processing resources are severely wasted in most cases.

Therefore, a new data flow processing method is urgently required by network devices represented by the gateway, to adapt to the foregoing two new features of the communication traffic, so as to support data flow processing with high traffic on a premise of avoiding a waste of resources as much as possible.

### SUMMARY

First, terms that may appear in embodiments of the present invention are described below.

Terms "first" and "second" in this application are merely used for description, and cannot be understood as indications or implications of relative importance or suggestions of a quantity of indicated technical features. Therefore, a feature limited by "first" or "second" may expressly or implicitly include one or more features. In the description of the present invention, unless otherwise noted, "multiple" means two or more than two. The term "and/or" in this application only describes an association relationship of associated objects and represents that three relationships may exist. For example, A and/or B may represent: Only A exists, both A and B exist, and only B exists. In addition, the character "/" in this specification generally indicates an "or" relationship between the associated objects.

Data flow: also referred to as a packet flow. The data flow is represented as a segment of data packet (also referred to as a packet for short), for example, an Internet Protocol (Internet Protocol, IP) packet. Generally, data packets are sequentially received and processed by a network device. A data flow may be divided into multiple segments according to different user sessions or carriers.

Pipeline: a manner of processing a packet in a data flow. That is, a packet processing process is divided into multiple processing actions (also referred to as actions for short) that are in a sequential order, and multiple processor cores perform the multiple processing actions according to the sequence of the multiple processing actions. One processor core may perform one or more of the multiple processing actions.

Static pipeline: A quantity of processor cores that perform packet processing is preset and no longer changes after being preset, and preset binding relationships exist between multiple processor cores and multiple processing actions, that is, a processor core can only perform one or more processing actions that have binding relationships with the processor core.

Dynamic pipeline: A processing capability for performing packet processing is dynamically raised or lowered as a requirement changes. Preset binding relationships may not exist between multiple processor cores and multiple processing actions. It should be noted that raising or lowering of the processing capability is represented as an increase or a decrease of a quantity of processor cores in an implementation, and is represented as raising or lowering of a packet processing capability of a processor core in another implementation.

Processing action spreading/folding (also referred to as processing action spreading/folding): Each processing action has a respective spreading attribute, and the spreading attribute is used to indicate that the processing action is spread or not spread. The processing action spreading is: modifying a spreading attribute of a processing action that is not spread, so that the spreading attribute indicates that the processing action is spread. The processing action folding is: modifying a spreading attribute of a processing action that is spread, so that the spreading attribute indicates that the processing action is not spread. It should be noted that if a spreading attribute of a processing action indicates that the processing action is spread, generally, the processing action is not further performed by a processor core that previously performs the processing action. However, another implementation also exists and is described in detail in an embodiment.

Pipeline spreading/folding (also referred to as pipeline spreading/folding): The pipeline spreading is: spreading one or more processing actions that are not spread; and the pipeline folding is: folding one or more processing actions that are spread. A state in which a pipeline is spread and a state in which a pipeline is not spread may exist in a network device provided in some embodiments of the present invention. That a pipeline is not spread means that all processing actions are performed by a same processor core, that is, all the processing actions are not spread. That a pipeline is spread means that at least one processing action is spread, and generally, a processing action that is spread and a processing action that is not spread are performed by different processor cores (an exception is described in a specific embodiment). When the network device is in the state in which a pipeline is spread, more processing actions may further be selected, so that the selected processing actions are performed by another processor core other than a current processor core, that is, the pipeline spreading is further performed in the state in which a pipeline is spread.

Queue (queue): a common data structure in the computer field. A data element stored in a queue is also referred to as a queue element. Inserting a queue element (for example, the foregoing packet) into the queue is referred to as enqueuing, and deleting a queue element from the queue is referred to as dequeuing. Inserting is allowed to be performed only at the back end of a queue, and deletion is allowed to be performed only at the front end of a queue, so that only an element that first enters a queue can be first deleted from the queue. Therefore, the queue is also referred to as a first in first out (first in first out, FIFO) linear list. Specifically, any queue element in a serial queue can only be processed by one processor core at a same moment, and any queue element in a parallel queue can be simultaneously processed by multiple processor cores. A specific implementation of the queue includes a linked list, an array, or the like.

Pipeline queue: also referred to as a queue in some cases. In a dynamic pipeline method, a queue used to transfer a packet between processor cores is referred to as the pipeline queue. Implementation principles of the pipeline queue are the same as those of a common queue.

Entry packet queue: In some embodiments of the present invention, a packet needs to be temporarily cached in a queue before being processed by a processor core. The queue is referred to as the entry packet queue, and implementation principles of the entry packet queue are the same as those of a common queue.

Thread (thread): a minimum unit in program execution; also referred to as a light-weight process (light-weight process, LWP).

Traffic overload: A processing capability (for example, a processing capability brought by a quantity of processing resources or a processing manner) that is currently used for processing a data flow in a computer system cannot satisfy a current traffic requirement of the data flow.

Traffic underload: opposite to the traffic overload. A processing capability that is currently used for processing a data flow in a computer system is far greater than a current traffic requirement of the data flow.

Multi-core processor: a processor that integrates two or more complete computing engines. A computing engine is also referred to as a core in this application. In some network devices, cores are classified into control cores and processor cores. A control core and a processor core represent computing engines that implement different functions. The control core is mainly configured to control and manage various resources or functions in a network device, and the processor core is mainly configured to implement a main function of the network device. For example, in a gateway, a control core belongs to a control plane, and is mainly configured to allocate and recycle a processor core, and control and manage a data flow (for example, establishing and releasing a connection, and delivering forwarding information to a forwarding plane). The processor core (also referred to as a forwarding core) belongs to a forwarding plane, and is mainly configured to forward and process a packet in a data flow. In other embodiments, the processor core may also be referred to as a core, that is, the core is the processor core for short. It should be noted that a processor used in some embodiments of the present invention may not necessarily be a multi-core processor, and may also be multiple single-core processors.

The embodiments of the present invention provide a data flow processing method and apparatus, and a system, so as to dynamically improve a processing capability when data flow traffic increases. Therefore, a waste of processing resources can be avoided to some extent when traffic is extremely small, and a requirement on data flow processing with relatively high traffic can be met.

According to a first aspect, an embodiment of the present invention provides a data flow processing method, the method is applied to a computer system including multiple processor cores, the computer system is configured to receive a data flow and perform M processing actions on a packet in the data flow, M is an integer greater than or equal to 2, and generally, the M processing actions are performed in a sequential order. In the computer system, a pipeline spreading condition is preset, and a processor core (referred to as a first processor core in subsequent description) of the multiple processor cores determines whether the preset pipeline spreading condition is met. If the preset pipeline spreading condition is met, the first processor core determines N processing actions that are not spread, and spreads the N processing actions, so that a second processor core performs the N processing actions that are spread. N is an integer greater than 0 and less than or equal to M. Spreading a processing action means that the processing action is performed by another processor core instead of a current processor core. In this way, more processing actions are performed in a pipeline manner, so as to improve data flow processing efficiency.

In some embodiments, a data flow in the method may be a specific data flow, or may be multiple different data flows.

In some embodiments, the first processor core that completes the foregoing determining step and processing action spreading step may be one processor core or multiple processor cores. This may be alternative, that is, the steps are not always completed by one or more specific processor cores.

In some embodiments, the preset pipeline spreading condition is used to indicate that a to-be-processed data flow requires a processing capability that is greater than a current processing capability that is for processing the data flow, that is, traffic is overloaded. The computer system may independently determine, according to a current traffic status, whether traffic is overloaded. That is, the computer system performs pipeline spreading when independently determining that the traffic is overloaded. In other embodiments, the computer system may also receive a pipeline spreading instruction from a user and spread a pipeline according to the instruction of the user. The pipeline spreading instruction may be delivered when traffic is overloaded, or may be delivered according to another requirement.

Based on the foregoing method in which the computer system independently determines that the traffic is overloaded, in some embodiments, the preset pipeline spreading condition is set as follows: A quantity of packets stored in an entry packet queue (also referred to as an entry packet queue depth) is greater than or equal to a first threshold. The entry packet queue stores a packet that is received by the computer system and on which no processing action is performed. Optionally, in another embodiment of the present invention, a packet may be stored by using another non-queue data structure.

The preset pipeline spreading condition may further include: A time period threshold is equal to 0. The time period threshold may also be referred to as a silent period, that is, the preset pipeline spreading condition further includes: The silent period ends (the time period threshold is 0). In this implementation, on a premise that the first processor core determines that the entry packet queue depth is greater than or equal to the first threshold, the first processor core further needs to determine whether the silent period ends, and if the silent period ends, the first processor core triggers current overload processing, that is, triggers pipeline spreading (S102 and S103), or if the silent period does not end, the first processor core performs current overload processing after the silent period ends. In a dynamic pipeline solution provided in this application, a processing action may be spread when traffic is overloaded, and may also be folded when traffic is underloaded. In this way, spreading and folding may be extremely frequently performed during a short time. However, this may be effectively avoided by setting a silent period. The silent period may be implemented by means of clock countdown. A countdown of the silent period may start when previous processing starts or ends. The previous processing may be traffic overload processing or traffic underload processing.

Based on the foregoing method in which the computer system independently determines that the traffic is overloaded, in some embodiments, the preset pipeline spreading condition may also be set as follows: A value of the entry packet queue depth is greater than a specific threshold; or the entry packet queue depth exceeds a specific threshold for multiple times during a preset time period; or the entry packet queue depth is greater than a specific threshold during a preset time period. A person of ordinary skill in the art may independently set, according to a feature of a data flow that is currently processed and/or a network status of the computer system, the preset pipeline spreading condition and/or a threshold in the condition. This is not limited in the present invention. All the conditions may be used in combination with the foregoing silent period.

It should be noted that, in this embodiment of the present invention, the entry packet queue depth may be detected each time a batch of packets are received, or may be periodically detected, or may be detected when a detection condition is met (for example, a possible traffic peak hour arrives).

A current entry packet queue depth reflects, to some extent, current traffic and possible traffic in a future time period. Therefore, determining, by detecting the entry packet queue depth, whether traffic is overloaded may be understood as pre-estimating current traffic and traffic in a future time period according to current data. Optionally, in other embodiments of the present invention, the current traffic and the traffic in a future time period may also be predicted according to historical data. For example, the first processor core collects statistics on a quantity of packets received since previous null receiving. If the quantity of packets is greater than or equal to a specific threshold, it indicates that traffic is overloaded, and pipeline spreading is enabled. The null receiving indicates that a quantity of received packets is equal to 0, and correspondingly, non-null receiving indicates that a quantity of received packets is greater than 0.

Based on the foregoing method in which a user instruction is received and a pipeline is spread according to the user instruction, in some embodiments, the first processor core determines whether configuration information of a user is received. The configuration information is used to indicate that pipeline spreading needs to be performed, or the configuration information includes the quantity N of processing actions that need to be spread, or the configuration information includes identifiers of the N processing actions that need to be spread. If the configuration information is received, a pipeline spreading operation is enabled. Specifically, the user sends a command instructing to spread the pipeline, or specifies, by using a configuration file, the quantity N of the processing actions that need to be spread. When such a command or a configuration file is received, the first processor core enables the pipeline spreading operation. Further, if the user learns, in advance, that some actions have relatively large calculation amounts and the actions need to be spread and processed by another core in advance to implement refined control, the user may further specify one or more specific processing actions by using a configuration file or another command manner, and then the first processor core spreads the one or more processing actions according to an instruction of the user. In this implementation, in a scenario in which a user can learn traffic in advance, the user may independently set a pipeline spreading moment according to a requirement, and may even independently set processing actions that need to be spread. Therefore, flexibility and accuracy of pipeline spreading are improved.

It should be noted that how the computer system performs processing when the preset pipeline spreading condition is not met is not limited in this embodiment of the present invention. For example, the first processor core continues to process a received packet in a current processing manner, or determines, according to another condition, whether to use another processing manner.

It should be noted that, during spreading of a processing action, a processing action in the computer system may be spread, or no processing action in the computer system is spread.

In some embodiments, when pipeline spreading needs to be performed, the first processor core needs to determine one or more processing actions that are not spread, and spreads the processing actions. The first processor core may select, in any one of the following manners, one or more processing actions that are not spread.
(a) N processing actions that are not spread (N is an integer greater than 0 and less than or equal to M) are selected. All subsequent actions that are not spread and that are of any processing action in the N processing actions that are not spread are included in the N processing actions that are not spread, and a subsequent action of the any processing action is performed after the any processing action is completed. That is, in this manner, N processing actions are spread in reversed order from a tail of a topological sequence. The topological sequence is a sequence obtained after topological sorting is performed on all processing actions according to a directed acyclic graph formed by an execution order. For example, a topological sequence of processing actions A to E is ABCDE, and none of the processing actions A to E are spread. According to this method, a processing action E, processing actions D and E, processing actions C to E, processing actions B to E, or processing actions A to E may be selected for spreading. If D and E are spread, C, B and C, or A to C may be selected for spreading. A serial dependence problem can be avoided in this manner.
(b) One or more processing actions that are not spread are randomly selected from a topological sequence for spreading, and an action that is not spread and that is dependent on a selected action is still not spread. Therefore, the action is to be performed by a same processor core that performs the selected action. That is, in this manner, any one or more processing actions are selected from the topological sequence. A topological sequence of ABCDE is still used as an example. B and D may be selected for spreading. Different from the former manner, C and E are not spread, so that B and C are to be performed by a same processor core (C still needs to be continuously performed because the processor core that completes B determines, before performing C, that C is not spread), and D and E are to be performed by a same processor core. In this manner, a problem of extremely high queue transfer overheads caused by excessive spreading layers can be avoided to some extent, and a quantity of actions performed by each core may be determined according to calculation amounts of processing actions, so as to balance processing amounts of different cores. B and D may be performed by different processor cores in some embodiments of the present invention, or may be performed by a same processor core in other embodiments the present invention, for example, when a pipeline queue pool is used.

In some embodiments, the first processor core modifies spreading attributes of the N processing actions that are not spread, so as to indicate that the processing actions are spread, and then transfers a packet to the second processor core by using a storage area, and the second processor core performs, on the packet, a processing action that is spread. The storage area is configured to store a packet on which a processing action corresponding to the storage area is to be performed. The spreading attribute is used to indicate whether the processing action is spread. It should be noted that the storage area is an area in a storage device of the computer system. In some embodiments, the storage area may be managed by using a queue (also referred to as a pipeline queue in this embodiment of the present invention) or another type of data structure. In some embodiments, an operation of modifying a spreading attribute may also be performed by another core under an instruction of the first processor core.

Based on a pipeline queue method, in some embodiments, the first processor core determines a pipeline queue corresponding to each of the N processing actions. Optionally, different processing actions may correspond to a same queue. When determining that a processing action is spread, a current processor core (that may be the first processor core or the second processor core) does not perform the processing action and enqueues, into a pipeline queue corresponding to the processing action, a packet on which the processing action is to be performed. The second processor core (that may be a disposed second processor core or another second processor core) obtains the packet and performs the processing action. A method in which the present invention is implemented by using another data structure is similar to a method in which the present invention is implemented by using a queue, and details are not described again.

In some embodiments, a spreading attribute of a processing action is a pipeline queue identifier of the processing action. When the pipeline queue identifier is null or an invalid value, it indicates that the processing action is not spread. When the pipeline queue identifier is a valid identifier, it indicates that the processing action is spread. Before a processing action is spread, a pipeline queue identifier of the processing action is null or an invalid value. When the processing action is to be spread, the first processor core sets the pipeline queue identifier of the processing action to an identifier of a pipeline queue corresponding to the processing action, that is, it indicates that the processing action is spread.

In other embodiments, a spreading attribute of a processing action is a pipeline label, for example, a flag flag whose value is true or false. When the flag=true, it indicates that the processing action is spread, and when the flag=false, it indicates that the processing action is not spread. The first processor core selects N processing actions whose flags=false (a selection method is described above), and modifies the flags of the N processing actions to be true.

It should be noted that because the pipeline queue identifier can implement functions of indicating a pipeline queue corresponding to the processing action and indicating whether the processing action is spread, the pipeline label is not necessarily required.

In some embodiments, all pipeline queues may be serial pipeline queues. A packet stored in a serial pipeline queue can be processed by only one processor core at a same moment. In this case, a to-be-spread processing action only needs to be mapped into any queue by using a method. To improve processing efficiency, in other embodiments, pipeline queues may also include a parallel pipeline queue. A packet stored in the parallel pipeline queue may be simultaneously processed by multiple processor cores. Optionally, the method provided in this embodiment of the present invention may also use another non-queue data structure, provided that the data structure has a serial attribute and a parallel attribute.

For to-be-spread processing actions determined by using a method in which spreading is performed in reversed order of a topological sequence, pipeline queues corresponding to the processing actions may be determined by using the following method.

In some embodiments, a pipeline queue corresponding to each processing action is determined according to a pipeline attribute of the processing action. The pipeline attribute (for example, a parallel attribute or a priority attribute) is used to indicate some constraint conditions when the processing action is performed, for example, whether the processing action can be performed by multiple processor cores in parallel, or an execution priority of the processing action compared with that of another processing action. The constraint conditions need to match features of the pipeline queue itself. However, in other embodiments, a constraint condition is also not necessarily required.

Specifically, in some embodiments, a processing action has a parallel attribute, and a value of the parallel attribute is used to indicate whether the processing action can be simultaneously processed by multiple processor cores. The first processor core obtains a value of a parallel attribute of each of the N processing actions, sets, to correspond to a parallel pipeline queue, each processing action that can be simultaneously processed by multiple processor cores, and sets, to correspond to a serial pipeline queue, each processing action that cannot be simultaneously processed by multiple processor cores. In other embodiments, in addition to the foregoing parallel attribute, a processing action further includes a priority attribute. The priority attribute is used to indicate a priority of the processing action. A priority of the pipeline queue corresponding to each of the N processing actions matches a priority of a corresponding processing action. Specifically, a processing action with a high execution priority corresponds to a pipeline queue with a high execution priority, and a processing action with a low execution priority corresponds to a pipeline queue with a low execution priority. A packet corresponding to the processing action with the high execution priority is stored in the pipeline queue with the high execution priority. This ensures that the processing action can be performed as soon as possible.

In other embodiments, the first processor core determines, according to a preset binding relationship between each processing action and the second processor core, a pipeline queue corresponding to the processing action. In this implementation, according to the binding relationship between each processing action and the second processor core, once a processing action is spread, the processing action is performed by a corresponding processor core bound to the processing action. Specifically, each second processor core has a pipeline queue corresponding to the second processor core. A packet on which a processing action bound to a second processor core is to be performed is placed in a pipeline queue corresponding to the second processor core, so that the second processor core can obtain the packet from the pipeline queue and perform the processing action bound to the second processor core.

For processing actions that are not spread and determined by using a method in which spreading is performed from an intermediate node in a topological sequence, pipeline queues corresponding to the processing actions may be determined by using the following method.

In some embodiments, if each processing action in a first action set can be simultaneously processed by multiple processor cores, the first processor core determines that a pipeline queue corresponding to the processing action is a parallel pipeline queue. If each processing action in a first action set cannot be simultaneously processed by multiple processor cores, the first processor core determines that a pipeline queue corresponding to the processing action is a serial pipeline queue. The first action set includes the processing action and all processing actions following the processing action and preceding the first processing action that is spread, and the first processing action that is spread is the first processing action that is spread and that follows the processing action.

One processing action P is selected as an example. If each processing action in a first action set that the processing action P belongs to can be simultaneously processed by multiple processor cores, the first processor core determines that a pipeline queue corresponding to the processing action P is a parallel pipeline queue. If each processing action in a first action set that the processing action P belongs to cannot be simultaneously processed by multiple processor cores, the first processor core determines that a pipeline queue corresponding to the processing action P is a serial pipeline queue. The first action set includes the processing action P and all processing actions following the processing action P and preceding the first processing action that is spread, and the first processing action that is spread is the first processing action that is spread and that follows the processing action P.

Further, in other embodiments, a priority of the pipeline queue corresponding to the processing action P needs to match a priority of a processing action with a highest priority in the first action set. The methods may be implemented by setting a parallel attribute or a priority attribute of a processing action, and reference is made to description above.

Further, it should be noted that if a processing action that is spread and that precedes the first processing action of the N processing actions that are not spread exists, the method further includes: re-determining, according to a second action set, a pipeline queue corresponding to a first processing action. The first processing action is the first processing action that is spread and that precedes the first processing action of the N processing actions, and the second action set includes the first processing action and all processing actions following the first processing action and preceding the first processing action of the N processing actions. The "first processing action" is a first to-be-spread processing action in N to-be-spread processing actions based on topological sorting of the processing actions.

Multiple to-be-spread processing actions are selected as an example. It is assumed that the processing action P is the first processing action of the to-be spread processing actions. If a processing action that is spread and that precedes P exists, after the processing action P is spread, a pipeline queue of the first processing action Q that is spread and that precedes the processing action P needs to be re-determined according to the second action set, and a pipeline queue identifier of the processing action Q needs to be updated. The second action set includes the processing action Q and all processing actions following the processing action Q and preceding the processing action P.

In the computer system provided in this embodiment of the present invention, the first processor core does not perform any processing action after the processing action is spread, and a packet on which the processing action is to be performed is to be placed in a pipeline queue corresponding to the processing action. In some embodiments, an identifier of a processing action to be performed on a packet is added to the packet before the packet is placed in a pipeline queue. The second processor core obtains the packet from the pipeline queue and performs the processing action on the packet according to the identifier, and further determines, before performing a next processing action, whether the next processing action is spread. If the next processing action is spread, the second processor core performs an operation similar to that performed by the first processor core. If the next processing action is not spread, the second processor core continues to perform the next processing action.

In some embodiments, when there are multiple processing actions that are spread and multiple pipeline queues, the second processor core may obtain a to-be-processed packet from the multiple pipeline queues by means of polling. Optionally, the to-be-processed packet carries an identifier of a processing action, and the processing action is a processing action corresponding to a pipeline queue that the to-be-processed packet is from. The second processor core performs the processing action on the to-be-processed packet according to the identifier of the processing action. Generally, there are multiple second processor cores in this case. That is, the second processor core has no binding relationship with a pipeline queue, and any second processor core may obtain a packet in any pipeline queue by means of polling. In this manner, flexibility of pipeline processing is further improved and load balancing of multiple second processor cores can be better maintained. In other embodiments, the computer system may also preset correspondences between multiple processor cores and multiple pipeline queues. A second processor core can only obtain, without polling, a packet from a pipeline queue corresponding to the second processor core.

In some embodiments, a to-be-processed packet may not carry an identifier of a to-be-performed processing action, provided that a processor core can determine a to-be-performed processing action.

In some embodiments, all pipeline queues may be managed by means of pooling, that is, a pipeline queue pool is established, so that the pipeline queue is managed by using a dedicated hardware pipeline queue pool manager. The manager directly manages a storage area corresponding to a queue, and all packets in the queue are cached in the storage area. The manager performs operations such as enqueuing, dequeuing, and queue polling, so as to reduce queue transfer overheads of a packet. Certainly, in other embodiments, a pipeline queue pool may also be managed by using a software program.

It can be learned that, according to the data flow processing method and apparatus, and the system that are provided in the embodiments of the present invention, a processing process performed on a packet is divided into multiple processing actions. Some processing actions are spread only when traffic of a current data flow meets a preset condition or that another type of pipeline spreading condition is met. Therefore, multiple processor cores may process a packet in a pipeline manner, so as to improve processing efficiency. When a bandwidth fluctuation amplitude of a data flow is relatively large and a peek bandwidth of the data flow is relatively large, compared with a static pipeline manner, the method provided in the embodiments of present invention avoids a waste of processing resources to some extent when traffic is relatively low, and can also better support data flow processing when traffic is relatively high.

In some embodiments, when a pipeline is spread, the computer system further supports dynamic folding of the pipeline. A method mainly includes: folding, by the first processor core, a pipeline when determining that a preset pipeline folding condition is met, that is, determining one or more processing actions that are spread and folding the processing action that is spread, so that a current processor core for packet processing determines, before performing the processing action, that the processing action is not spread, and then the current processor core for packet processing may continue to perform the processing action on a packet. The preset pipeline folding condition is used to indicate that the data flow needs a processing capability that is less than a current processing capability for processing the data flow. The preset pipeline folding condition may be configured by a user according to a requirement, or may be another equivalent condition such as a condition that network traffic is extremely small.

In some embodiments, the preset pipeline folding condition is set as follows: A quantity of packets cached in an entry packet queue is less than a second threshold. The second threshold may be equal to or less than the foregoing first threshold. Another manner in which the pipeline folding condition is set is similar to a manner in which the preset pipeline spreading condition is set in the foregoing embodiment. It should be noted that, by using the method that is based on historical data prediction, the pipeline folding condition may be set as follows: A quantity of times of null packet-receiving since previous non-null receiving exceeds a specific threshold. For another setting manner, refer to a foregoing manner in which the pipeline spreading condition is set. It should be noted that the two types of conditions may be set in a same type of manner. For example, both are set in a manner in which a quantity of packets is compared with a threshold, or may be set in different types of manners.

In some embodiments, a folding processing action includes modifying a spreading attribute of a processing action. Specifically, in some embodiments, the first processor core sets a pipeline label of a to-be-folded processing action to indicate that a corresponding processing action is not spread. For example, a value of the pipeline label is modified to 0. If a value of a pipeline label is 1, it indicates that a processing action is spread, and if the value is 0, it indicates that the processing action is not spread. In other embodiments, the first processor core sets a pipeline queue identifier of a to-be-folded processing action to be invalid.

It should be noted that folding and spreading of an action are opposite. Therefore, a method for selecting to-be-folded actions and folding the actions is similar but opposite to a method used during spreading. For example, folding is performed in a topological sequence from a tail or an intermediate node in the topological sequence, and details are not described herein again.

It can be learned that the processing method provided in this embodiment of the present invention may further dynamically reduce processing resources when traffic is underloaded, thereby avoiding a waste of processing resources to some extent. According to the method provided in this embodiment of the present invention, when a specific condition is met, a pipeline may be spread or folded. Therefore, a processing capability of the computer system can be used more efficiently, and processing efficiency of a data flow can be higher.

In some embodiments, the computer system may further apply for a new processing resource when a preset condition is met. For example, the computer system dynamically applies to a control core for a new processor core, and uses the new processor core for pipeline processing. The control core is generally configured to manage multiple processor cores of the computer system, or may perform low-power processing on a processor core when a preset condition is met. By using such a method, a feature of a large fluctuation amplitude of a data flow can be better adapted, and utilization of a processing resource can be improved. Optionally, the control core and a processor core may be located in a same computer system or different computer systems.

In some embodiments, when determining that the preset pipeline spreading condition is met and that a quantity of processing actions that are spread is greater than a first threshold, the first processor core sends a processing resource application request to a control core. The control core allocates one or more third processor cores according to the processing resource application request, to perform the processing actions that are spread. The control core is configured to apply for or recycle a processor core. For example, in a gateway or a router, a control core is on a control plane, and a processor core is on a forwarding plane. However, this is not limited in another network device. The first threshold is a preset value, and the value is generally greater than half of a total quantity of processing actions. "Greater than" in this embodiment of the present invention may also be equivalently replaced by "greater than or equal to".

In some embodiments, when a processing capability is redundant, the computer system may further reduce a processing resource or reduce energy consumption of a current processor core. In some embodiments, when determining that the preset pipeline folding condition is met and that the quantity of processing actions that are spread is less than a second threshold, the first processor core sends a processing resource recycling request to the control core. The control core recycles one or more second processor cores according to the processing resource recycling request. In other embodiments, the first processor core performs low-power processing on the at least one second processor core when determining that the preset pipeline folding condition is met and that the quantity of processing actions that are spread is less than a second threshold. Optionally, the low-power processing includes hibernating the at least one second processor core or instructing the at least one second processor core to decrease a dominant frequency. The second threshold is generally less than half of a total quantity of processing actions.

According to a second aspect, an embodiment of the present invention further provides a data flow processing apparatus. The apparatus includes one or more functional units configured to implement the foregoing method steps. When the apparatus includes multiple functional units, the function units are generally in a one-to-one correspondence with the foregoing method steps. For example, the apparatus includes: a traffic detection unit, configured to determine whether a preset pipeline spreading condition is met; a pipeline management unit, configured to: when the traffic detection unit determines that the preset pipeline spreading condition is met, determine one or more processing actions that are not spread, and spread the one or more processing actions that are not spread; and a processing unit, configured to obtain a packet and perform, on the packet, a processing action that is spread, or a processing action that is not spread. It should be noted that the functional unit may be implemented by using only a software program, or by using only hardware, or by using a combination of software and hardware.

According to a third aspect, an embodiment of the present invention further provides a computer system such as a gateway or a router. The computer system is configured to receive a data flow and perform, on a packet in the data flow, multiple processing actions that are in a sequential order. The computer system includes multiple processor cores, and one or more processor cores are configured to determine whether a preset pipeline spreading condition is met; if the preset pipeline spreading condition is met, a first processor core determines one or more processing actions that are not spread, and spreads the one or more processing actions; and one or more other processor cores are configured to perform the one or more processing actions that are spread. In some embodiments, the multiple processor cores of the computer system may further be configured to perform a method provided in any embodiment of the first aspect.

According to a fourth aspect, an embodiment of the present invention further provides a computer system. The computer system is configured to receive a data flow and perform, on a packet in the data flow, multiple processing actions that are in a sequential order. The computer system includes at least one multi-core processor and a memory, and the memory is configured to store a software program. When the software program is performed by any processor core in the multi-core processor, a first processor core in the multi-core processor determines whether a preset pipeline spreading condition is met; if the preset pipeline spreading condition is met, the first processor core determines one or more processing actions that are not spread, and spreads the one or more processing actions; and a second processor core in the multi-core processor is configured to perform the one or more processing actions that are spread. In some embodiments, the multi-core processor of the computer system is further configured to perform a method in any embodiment of the first aspect.

According to a fifth aspect, an embodiment of the present invention further provides a storage medium, configured to store a computer program. When the computer program is executed by a processor, the processor is configured to implement any method provided in the first aspect. Specifically, the computer program may include one or more program units configured to implement each step of the method.

It can be learned that, according to the data flow processing method and apparatus, and the system that are provided in the embodiments of the present invention, a processing process performed on a packet is divided into multiple processing actions. Some processing actions are spread only when traffic of a current data flow meets a preset condition. Therefore, multiple processor cores may process a packet in a pipeline manner, so as to improve processing efficiency. When a bandwidth fluctuation amplitude of a data flow is relatively large and a peek bandwidth of the data flow is relatively large, compared with a static pipeline manner, the method provided in the embodiments of present invention avoids a waste of processing resources to some extent when traffic is relatively low, and can also better support data flow processing when traffic is relatively high. In addition, according to a method provided in another embodiment of the present invention, when a preset condition is met, a first processor core may dynamically apply to a control core for a new processor core, and the new processor core is used for pipeline processing. Low-power processing may also be performed on a processor core when a preset condition is met. Therefore, a feature of a large fluctuation amplitude of a data flow can be better adapted, and utilization of a processing resource can be improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from the accompanying drawings without creative efforts.
FIG. 1 is a schematic scenario diagram before and after a pipeline is spread according to an embodiment of the present invention;
FIG. 2 is a schematic diagram of a network architecture of a gateway;
FIG. 3 is a schematic structural diagram of a gateway according to an embodiment of the present invention;
FIG. 4 is a schematic structural diagram of a forwarding plane in a gateway according to an embodiment of the present invention;
FIG. 5 is a schematic flowchart of a method for performing a receiving thread;
FIG. 6 is an example diagram of a directed acyclic graph in which a processing action is a node;
FIG. 7, FIG. 8, and FIG. 9A-9B are example diagrams of spreading and folding of a processing action;
FIG. 10 is a schematic flowchart of a method for performing an entry processing thread;
FIG. 11 is a schematic flowchart of a method for performing a common processing thread;
FIG. 12 is a schematic diagram of internal interaction of data flow processing according to an embodiment of the present invention;
FIG. 13 is a schematic diagram of internal interaction of data flow processing according to another embodiment of the present invention;
FIG. 14 is a schematic implementation diagram of a method in a virtual network function scenario according to an embodiment of the present invention;
FIG. 15 is a schematic diagram of internal interaction of data flow processing according to still another embodiment of the present invention;
FIG. 16 is a schematic structural diagram of a computer system according to an embodiment of the present invention; and
FIG. 17A and FIG. 17B are a schematic structural diagram of another computer system according to an embodiment of the present invention.

### DESCRIPTION OF EMBODIMENTS

The following describes the technical solutions in the embodiments of the present invention with reference to the accompanying drawings.

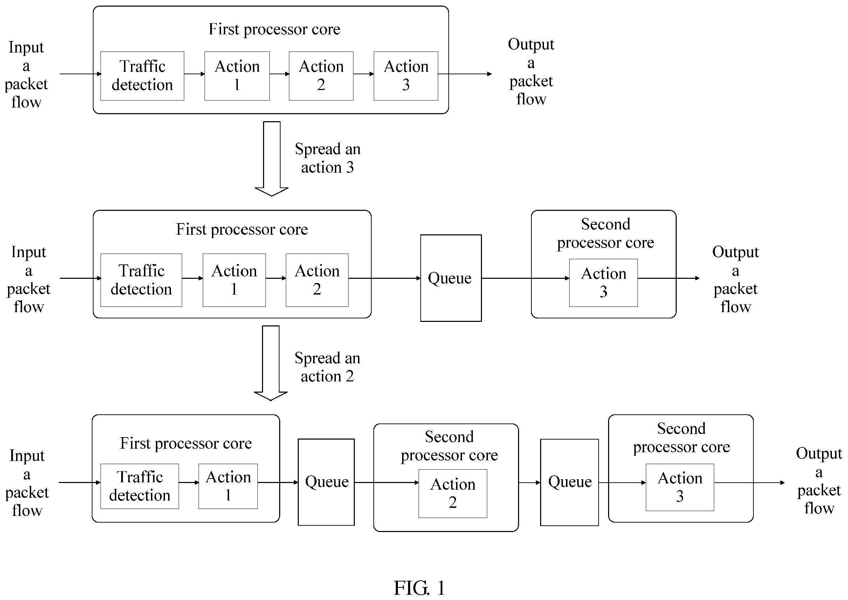

Referring to FIG. 1, FIG. 1 is a schematic scenario diagram before and after a pipeline is spread according to an embodiment of the present invention. As shown in FIG. 1, initially, a first processor core receives a packet flow, performs traffic detection and all three processing actions, and spreads an action 3 when determining, according to a traffic detection result, that a preset pipeline spreading condition is met. Specifically, for each packet, the first processor core enqueues the packet into a queue after completing an action 2, and a second processor core obtains the packet from the queue and performs the action 3 on the packet.

Further, when the action 3 is spread, the first processor core spreads the action 2 if detecting that traffic is still overloaded. After the action 2 is spread, the first processor core enqueues the packet into a queue after completing an action 1, and the second processor core performs the action 2 on the packet. After the second processor core completes the action 2, because the action 3 is still spread, the second processor core enqueues the packet into a queue, so that a next processor core performs the action 3. The action 2 and the action 3 may be performed by a same second processor core or different second processor cores.

It should be noted that FIG. 1 is merely an example of the method provided in this embodiment of the present invention for ease of understanding the present invention. In respect of queue management and processor core management, there are multiple implementations of the method provided in this embodiment of the present invention. This is not limited to FIG. 1.

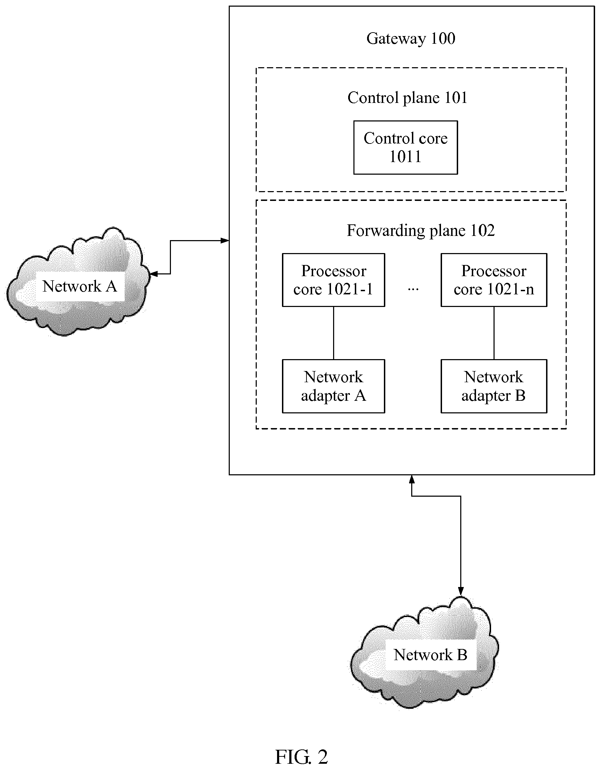

Referring to FIG. 2, FIG. 2 is a schematic diagram of a network architecture of a gateway and an internal implementation of the gateway. The gateway is a typical computer system to which the method provided in this embodiment of the present invention is applied. Optionally, this embodiment of the present invention may also be applied to a router or another type of network device. As shown in FIG. 2, a gateway 100 implements interconnection between a network A and a network B. A control plane 101 and a forwarding plane 102 exist in the gateway 100. The control plane 101 includes a control core 1011, and a function of the control plane 101 is basically implemented by the control core 1011. The forwarding plane 102 includes 1 to n processor cores 1021. A forwarding processing method used by the forwarding plane is a dynamic pipeline method provided in this embodiment of the present invention. The gateway 100 generally supports data flow processing in two directions: One is that a data flow from the network A is received from a network adapter A (or a network interface), and after the processor cores 1021 perform several forwarding actions on the data flow, the data flow is sent to the network B by using a network adapter B. The other is that a data flow from the network B is received by using the network adapter B, and after the processor cores 1021 perform several forwarding actions on the data flow, the data flow is sent to the network A by using the network adapter A. In some embodiments of the present invention, traffic of a data flow from the network adapter A or the network adapter B is detected in real time, so as to implement dynamic spreading and folding of a forwarding action, thereby meeting requirements for a high bandwidth and a large amplitude of forwarding traffic in future communications.

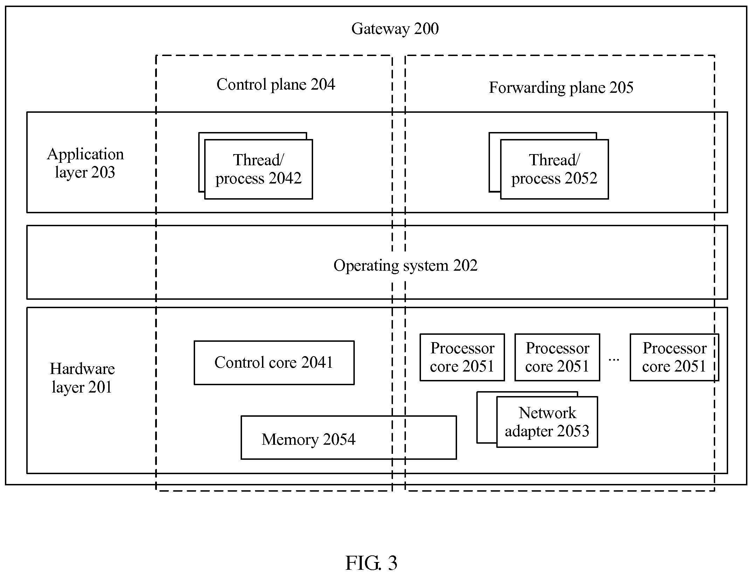

Referring to FIG. 3, FIG. 3 is a schematic structural diagram of an interior of a gateway according to an embodiment of the present invention. A gateway 200 includes a hardware layer 201, an operating system 202, and an application layer 203 running in the operating system 202. The hardware layer 201 includes a control core 2041 (there may be multiple control cores), multiple processor cores 2051, a network adapter 2053, and a memory 2054. The multiple cores may belong to a same processor or different processors. A thread/process 2042 and a thread/process 2052 run at the application layer 203. A control plane 204 of the gateway 200 is formed by some threads/processes 2042 of the application layer 203, some functional modules of the operating system 202, and the control core 2041. A forwarding plane 205 of the gateway 200 is formed by other threads/processes 2052 of the application layer 203, some functional modules of the operating system 202, and the processor core 2051 and the network adapter 2053 of the hardware layer 201. The dynamic pipeline method provided in this embodiment of the present invention is mainly applied to the forwarding plane 205 and is mainly implemented by the thread/process 2052 running on the forwarding plane 205. When a method for applying for and recycling a processor core is used, the thread/process 2042 running on the control plane 204 is also used.

It should be noted that, in a gateway, a processor core is used as a core of a forwarding plane to implement a main processing action of the gateway, that is, forwarding processing. Therefore, the method provided in this embodiment of the present invention is mainly applied to a processor core of a forwarding plane. However, in some other network devices, especially a network device in which a forwarding plane and a control plane are not differentiated, the method provided in this embodiment of the present invention may be applied to any core for data flow processing instead of being applied to only a processor core of a forwarding plane.

The dynamic pipeline method provided in this embodiment of the present invention may be implemented by using software that is specifically represented as one or more software service modules disposed at the application layer 203. A software program that implements the service module is stored in the memory 2054. When the software program is read and performed by a processor (may be any core in FIG. 3) at the hardware layer 201, the application layer 203 enables multiple threads and/or processes to implement the dynamic pipeline method provided in this embodiment of the present invention.

A person skilled in the art should understand that the thread/process 2042 and the thread/process 2052 logically belong to the application layer 204, however, the thread/process 2042 and the thread/process 2052 are executed by a corresponding control core 2041 or processor core 2051. In some embodiments of the present invention, a binding relationship is preset between a core and each thread or process, that is, a thread or process can only be performed by a core bound to the thread or process. However, in other embodiments of the present invention, no binding relationship exists between a core and each thread or process. In some systems, setting of a binding relationship between a core and each thread or process is also referred to as setting of affinity between a CPU and a thread or process, and details are not described in this embodiment of the present invention since there are already corresponding implementations in the prior art.

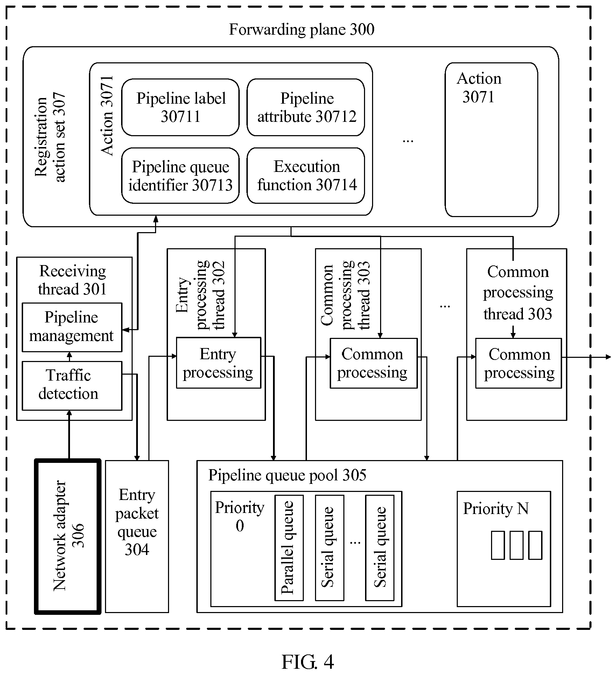

Referring to FIG. 4, FIG. 4 is a schematic diagram of an internal implementation of a forwarding plane 300. Except that a network adapter 306 is at a hardware layer of the forwarding plane, all other modules may be implemented by using a software program. When a software program is used for an implementation, the software program is generally deployed at an application layer of the forwarding plane (referring to FIG. 3). Certainly, the software program itself is stored in a memory of the hardware layer. This embodiment of the present invention relates to packet receiving and various forwarding processing actions. Packet output is performed as a special action and is not presented in FIG. 4. All processing actions except packet receiving and output are added to a registration action set 307 by means of dynamic registration.

An action 3071 in the registration action set 307 mainly includes the following four parts of information: a pipeline label 30711, a pipeline attribute 30712, a pipeline queue identifier (ID) 30713, and an execution function 30714.
(1) The pipeline label 30711 is used to indicate whether an action is spread. The pipeline label 30711 may be updated when a receiving thread 301 performs pipeline management 3011. When performing an action, a current processor core determines, according to the pipeline label 30711, whether the action is spread.
   Optionally, the pipeline label 30711 may not exist, and a function thereof may be implemented by the pipeline queue identifier 30713.
(2) The pipeline queue identifier (ID) 30713 is used to indicate a pipeline queue corresponding to the action. The pipeline queue identifier 30713 may also be updated when the receiving thread 301 performs pipeline management 3011. In the method provided in this embodiment of the present invention, a current processor core determines, according to the pipeline queue identifier 30713, a queue that is in a pipeline queue pool 305 and into which a to-be-processed packet is enqueued.
(3) The pipeline attribute 30712 includes a parallel attribute and a priority attribute. The parallel attribute is used to indicate whether the action can be performed by multiple cores in parallel. When performing pipeline management 3011, the receiving thread 301 determines, according to the attribute, whether the action corresponds to a parallel queue or a serial queue. The priority attribute is used to indicate an execution priority of the action, and when performing pipeline management 3011, the receiving tread 301 determines, according to the attribute, a priority of a queue corresponding to the action.
(4) The execution function 30714: A processor core (or thread) performs the processing action by invoking the execution function 30714.

FIG. 4 also shows three types of threads (or processes): the receiving thread 301, an entry processing thread 302, and a common processing thread 303 (also referred to as a pipeline processing thread). To avoid overheads brought by switching between threads, in this embodiment of the present invention, one thread is set to be bound to one processor core. The receiving thread 301 is bound to a receiving core, the entry processing thread 302 is bound to an entry processor core, and the common processing thread 303 is bound to a common processor core. All the three types of cores belong to the hardware layer of the forwarding plane 300. Reference may be made to FIG. 3, and details are not shown in FIG. 4 again. Optionally, in other embodiments, the receiving thread 301 and the entry processing thread 302 may be bound to a same processor core, or the receiving thread 301 and the entry processing thread 302 are combined into one thread.
(1) The receiving thread 301 is responsible for receiving a packet from the network adapter 306 or a network interface (or a distribution core responsible for distributing a packet), enqueuing the packet into an entry packet queue 304, then performing traffic detection according to a quantity of packets in the entry packet queue 304, and performing pipeline management according to a detection result. The pipeline management herein includes dynamic spreading and dynamic folding of a pipeline. The entry packet queue 304 is used to cache, in a pointer manner, a packet that is received by the receiving thread 301 and that is not processed.
   Optionally, the receiving thread 301 may also obtain a depth of the entry packet queue 304 before a currently received packet is enqueued into the entry packet queue 304, then add the depth and a quantity of currently received packets, and perform traffic detection according to a result obtained after the adding.
   It should be noted that the receiving thread 301 is at the application layer and may invoke an interface of an operating system (refer to FIG. 3) to access the network adapter 306 of the hardware layer or the distribution core, or may directly access the network adapter 306 or the distribution core. This is not limited in this embodiment of the present invention.
(2) The entry processing thread 302 is responsible for obtaining a packet from the entry packet queue 304 and performing entry processing 3021 on the obtained packet. In a process of performing entry processing, if a current to-be-performed processing action is spread, a pipeline queue corresponding to the processing action is obtained, and a to-be-processed packet is enqueued into the pipeline queue.
(3) The common processing thread 303 is responsible for obtaining a packet from a pipeline queue in the pipeline queue pool 305 and then performing a processing action on the obtained packet. To be differentiated from entry processing, processing performed by the common processing thread is referred to as common processing. The common processing includes the first processing action performed by the common processing thread after the packet is obtained, and all actions following the first processing action and preceding the first subsequent action that is spread. Therefore, the common processing thread 303 may perform one processing action or multiple processing actions. Except the first processing action, when a to-be-performed processing action is a processing action that is spread, the common processing thread 303 enqueues a to-be-processed packet into a pipeline queue corresponding to the processing action.

To improve system flexibility and dynamic expansibility of the common processing thread 303, in this embodiment of the present invention, all pipeline queues are managed according to priorities by means of pooling, that is, the pipeline queue pool 305 is established. Each pipeline queue (also referred to as a queue) in the pipeline queue pool 305 caches a packet in the pointer manner. The pipeline queue pool 305 includes queues of different priorities (priorities 0 to N). A queue of a relatively high priority may be preferentially processed. In addition, to improve concurrency of packet processing, pipeline queues of each priority are classified into two types, (a) and (b).
(a) One parallel pipeline queue: A packet in the queue may be simultaneously processed by multiple common processing threads 303. A sequence of processing a packet in a parallel queue is not limited, and the parallel queue is not locked by a processor core. Therefore, only one parallel pipeline queue is set in this embodiment of the present invention. Optionally, multiple parallel pipeline queues may be set in other embodiments of the present invention.
(b) Multiple serial pipeline queues: A packet in the queue can only be processed by one common processing thread at a same moment.

Each pipeline queue is differentiated by using a unique queue ID. Because one pipeline queue may correspond to multiple processing actions, for differentiation, before each packet cached in the pipeline queue pool 305 is placed in the pipeline queue pool, a label (or referred to as an identifier) that identifies a to-be-performed processing action is added to the packet. The common processing thread 303 performs, according to the label, a corresponding processing action on a packet obtained from the pipeline queue pool.

A person skilled in the art should understand that an action performed by a processor is actually an execution instance of the action 3071. In this embodiment of the present invention, each action may have multiple execution instances. A pipeline queue may correspond to multiple execution instances of an action. Therefore, a label of a to-be-performed processing action needs to be set (the label is used to indicate a specific execution instance). However, in another embodiment of the present invention, each action can have only one execution instance, and a packet of each user/carrier is processed by using the execution instance. In this case, a quantity of action instances is small, and an execution instance of each action may be directly bound to a specific queue. As a result, a label of a to-be-processed processing action does not need to be set. However, this manner has disadvantages: (1) An action instance quantity is limited, which causes a limitation to a multi-core spreading range. (2) A difference between different action calculation amounts is large, and loads of multiple cores are not even. Generally, in a network device such as a gateway or a router, each action can have multiple execution instances, and a packet of each user/carrier is processed by an instance corresponding to the packet. In this case, a quantity of action instances is large, and a manner that is provided in this embodiment of the present invention and in which an action label is added has a better effect than a binding manner.

In other embodiments, the pipeline queue pool may include more types of pipeline queues, or only one type of queue. In other embodiments, the pipeline queue pool 305 is not necessary.

It should be noted that, in this embodiment of the present invention, there is no binding relationship between a common processing thread and a pipeline queue, and all common processing threads may obtain, by means of polling, a packet from all non-null pipeline queues. Therefore, after the packet is placed in a pipeline queue, a thread that obtains the packet this time may be a common processing thread that performs a processing action on the packet at a previous time. A scheduling policy is further set in this embodiment of the present invention, that is, different priorities are set for pipeline queues, and a packet in a queue of a high priority is obtained preferentially. Optionally, another scheduling policy may be randomly obtained or be set in other embodiments of the present invention.

A detailed implementation of the solution is as follows:

The receiving thread 301 receives, by means of polling, a packet from the network adapter 306 and enqueues the packet into the entry packet queue 304. Each time a packet is received, the receiving thread 301 performs traffic detection once. For example, 32 packets are received once, and detection is performed once after the 32 packets are received. Traffic detection is implemented mainly based on the depth of the entry packet queue 304 (that is, a quantity of packets cached in the entry packet queue) and two predefined thresholds: an overload threshold and an underload threshold. When the depth of the entry packet queue 304 is greater than or equal to the overload threshold, traffic is overloaded, and when the depth of the entry packet queue 304 is less than the underload threshold, traffic is underloaded.

The receiving thread 301 performs pipeline management according to a traffic detection result. The management mainly includes overload processing and underload processing, that is, spreading and folding of a pipeline. When traffic is overloaded, the receiving thread 301 selects, according to a dynamic pipeline policy, several processing actions that are not spread, and spreads the processing actions. A specific spreading method is as follows: A queue in the pipeline queue pool is selected according to a pipeline attribute of a to-be-spread action; a pipeline queue ID of the to-be-spread action is set to an ID of the queue; and then a pipeline label of the to-be-spread action is marked as "spread". When traffic is underloaded, the receiving thread 301 selects, according to the dynamic pipeline policy, several processing actions that are spread, and folds the processing actions. A specific folding method is as follows: The pipeline queue ID is set to be invalid, and the pipeline label is marked as "not spread". The following describes the dynamic pipeline policy in detail.

The entry processing thread 302 processes packets in the entry packet queue 304 by means of polling. For each packet, before an action is performed each time, whether the action is spread needs to be first determined according to a pipeline label of the action. If the action is spread, a label indicating the action is added to the packet, and the packet is enqueued into a pipeline queue corresponding to the action; or if the action is not spread, the entry processing thread 302 directly performs the action on the packet. In other embodiments of the present invention, an entry action may be preset. The entry action is used to instruct to start the determining step. Before each action following the entry action is performed, the entry processing thread 302 determines whether the action is spread. The entry processing thread may directly perform each action preceding the entry action without determining whether the action is spread.

The common processing threshold 303 obtains a packet from the pipeline queue pool by means of polling according to a scheduling policy, and processes the packet. After the first action is completed, before performing an action, the common processing thread 303 needs to first determine whether the action is spread. If the action is spread, a label indicating the action is added to the packet, and the packet is enqueued into a pipeline queue corresponding to the action; or if the action is not spread, the common processing thread 303 continues to perform the action.

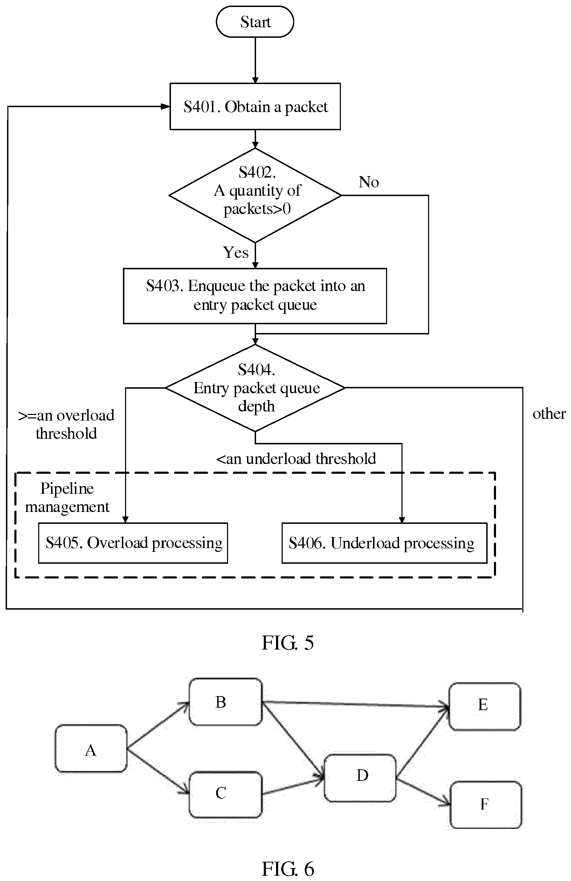

Referring to FIG. 5, FIG. 5 is a schematic diagram of traffic detection performed by a receiving thread 301. The receiving thread obtains a packet (S401); then determines whether a quantity of packets is greater than 0 (S402); enqueues the packet into an entry packet queue if the quantity of packets is greater than 0 (S403); then obtains a depth of the entry packet queue and determines whether the depth of the entry packet queue is greater than or equal to an overload threshold (S404) or less than an underload threshold (S404); and performs overload processing if the depth is greater than or equal to the overload threshold (S405), or performs underload processing if the depth is less than the underload threshold (S406). If the quantity of packets is equal to 0, it indicates that this obtaining is invalid. Enqueuing may be skipped and the depth of the entry packet queue may be directly obtained, and a subsequent step is performed, or current traffic detection may be ignored.

The specified underload threshold is less than the overload threshold in this embodiment of the present invention. If the depth of the entry packet queue does not fall into any range in the foregoing cases, that is, the depth is greater than or equal to the underload threshold and is less than the overload threshold, it indicates that the depth is in a normal traffic range currently, and a next round of packet obtaining can be performed.

To avoid extremely frequent pipeline adjustment and provide an adaptation time for a common processing thread, an extra silent period may be set, that is, after each overload processing or underload processing, next overload processing or underload processing can be triggered only after the silent period ends.

A process in which a network device processes a packet may be divided into multiple processing actions that are in a sequential order. For example, a gateway may divide, according to a function, a packet forwarding process into multiple processing actions such as decapsulation, decryption, and accounting. The multiple processing actions (A to F) are organized, in a sequential order (or referred to as a sequence dependence relationship), into a directed acyclic graph (Directed Acyclic Graph, DAG) shown in FIG. 6. One type of topological sorting based on the DAG graph is: ABCDEF (or may be ACBDEF or ABCDFE). In the topological sorting, a preceding action is performed before a following action. The following action is referred to as a subsequent action of the preceding action, and there are two types of subsequent actions: a direct subsequent action and an indirect subsequent action. For example, E is referred to as a direct subsequent action of D, and E may also be referred to as an indirect subsequent action of C. Based on this, the following describes two types of dynamic pipeline policies in detail.

A first type is a dynamic pipeline policy in which a tail of a topological sequence takes precedence. All subsequent actions of any processing action in a processing action set selected by using this policy are included in the selected processing action set.

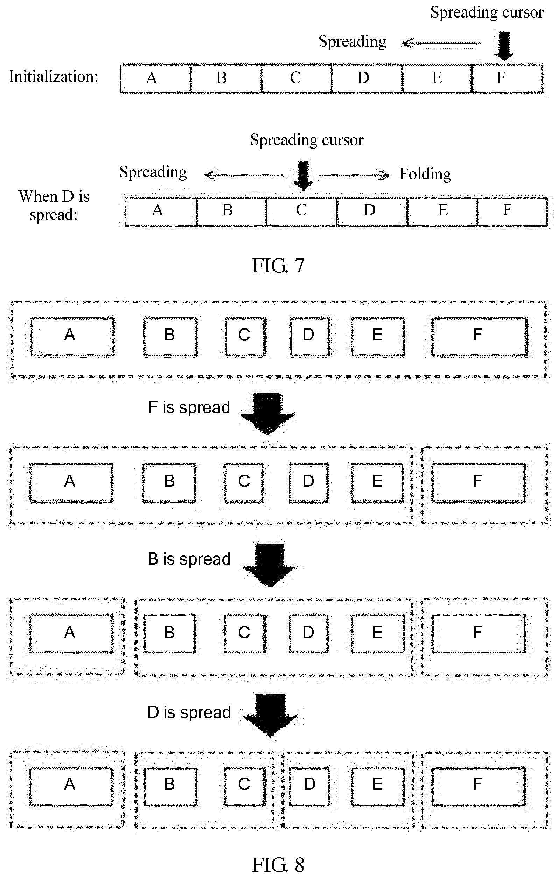

Specifically, as shown in FIG. 7, a spreading cursor is set and points to the tail of the topological sequence during initialization. When action spreading needs to be performed, the cursor moves leftward, and an action that the cursor passes (including a cursor start location, not including a cursor end location) is spread. When action folding needs to be performed, the cursor moves rightward, and an action that the cursor passes (not including a cursor start location, including a cursor end location) is folded. As shown in FIG. 7, the cursor moves leftward to an action C, so that actions D, E, and F need to be spread.

It should be noted that a quantity of actions spread or folded in each time of overload processing or underload processing may be preset by a person skilled in the art or may be dynamically set according to a current traffic status. This is not limited in this embodiment of the present invention.

This policy can ensure that all subsequent actions of an action are spread when the action is spread. Therefore, a serial dependence problem during spreading can be properly addressed. The serial dependence problem may be described as follows: If a subsequent action of an action on a DAG graph is a serial action that is not spread, the action can only be spread in a serial manner to avoid performing the serial action in a parallel manner. For example, D is a serial action, C is a parallel action, and D is a subsequent action of C. If C is spread and D is not spread, D, like C, may be simultaneously processed by multiple processor cores.

The action D is used as an example, and a spreading process includes: (1) selecting, from a pipeline queue pool according to a priority attribute of the action D, a pipeline queue of a corresponding priority; (2) selecting, according to a parallel attribute of the action D, a specific queue from the pipeline queue of the corresponding priority, and if the parallel attribute is parallel, selecting a unique parallel queue corresponding to the priority, or if the parallel attribute is not parallel, selecting a serial queue in a hash (hash) manner; (3) setting a pipeline queue ID of the action D to an ID of the selected queue; and (4) setting a pipeline label of the action D to be spread (for example, setting the pipeline label to 1). The hash manner may include: substituting an identifier of an action or other information of the action into a hash function, so as to obtain a corresponding queue ID.

The action D is still used as an example, and a folding process includes: (1) setting a pipeline queue ID of the action D to be invalid; and (2) setting a pipeline label of the action D to be not spread (for example, setting the pipeline label to 0).

A second type is a dynamic pipeline policy in which spreading is performed from an intermediate node in a topological sequence. To avoid the serial dependence problem, in the former policy, spreading is performed strictly according to a reversed order of a topological sequence, and folding is sequentially performed strictly according to the topological sequence. However, this policy may have disadvantages in the following cases: (1) When an action granularity is extremely small (that is, a calculation amount of an action is extremely small), spreading layers may be excessive and queue transfer overheads may be extremely high. (2) When a difference between action granularities is extremely large (there is an action with a very small calculation amount, and there is also an action with a very large calculation amount), loads of multiple cores may be not even. By using the second policy, multiple consecutive actions with a small calculation amount may be spread or folded as an entirety, or adjacent actions may be combined, so that calculation amounts of different spreading actions are approximately even.

As shown in FIG. 8, a topological sequence is ABCDEF, and spreading is sequentially performed on a sequence tail action F, an intermediate action B, and an intermediate action D. After the spreading, because an action E and an action C are not spread, and the action E is performed following the action D, and the action C is performed following the action B. Specifically, when a common processing thread determines, after obtaining a to-be-processed packet and performing the action B on the to-be-processed packet, that the action C is not spread, the common processing thread continues to perform the action C. Then, if the action D is spread, the common processing thread re-enqueues the packet into a pipeline queue pool according to a pipeline queue ID of the action D, so as to wait for processing by a next common processing thread.

Spreading and folding of an intermediate action node are dependent on a set attribute of an action set. Similar to a pipeline attribute of an action, the set attribute may also include a parallel attribute and a priority attribute. Specifically, if a parallel attribute of any action in an action set [X, Y] is serial, a parallel attribute of the action set [X, Y] is serial; or if parallel attributes of all actions in the action set [X, Y] are parallel, a parallel attribute of the action set [X, Y] is parallel. A priority attribute of the action set [X, Y] is a highest priority of actions in the action set [X, Y]. In other embodiments of the present invention, the set attribute of the action set may be set in another manner. For example, the priority attribute is an average of priorities of all actions. This is not limited in this embodiment of the present invention.

It is assumed that, in a topological sequence, the first action that is spread and that follows an action X is Y, the first action that is spread and that precedes X is Z, and an action at a tail of the sequence is T. Spreading is performed on the action X, and a spreading process is as follows:
(1) Set a pipeline label of the action X to be spread.
(2) If Y exists, update a pipeline queue ID of X according to a set attribute of an action set [X, Y); if Y does not exist, update a pipeline queue ID of X according to a set attribute of an action set [X, T].
(3) If Z exists, update a pipeline queue ID of Z according to a set attribute of an action set [Z, X).

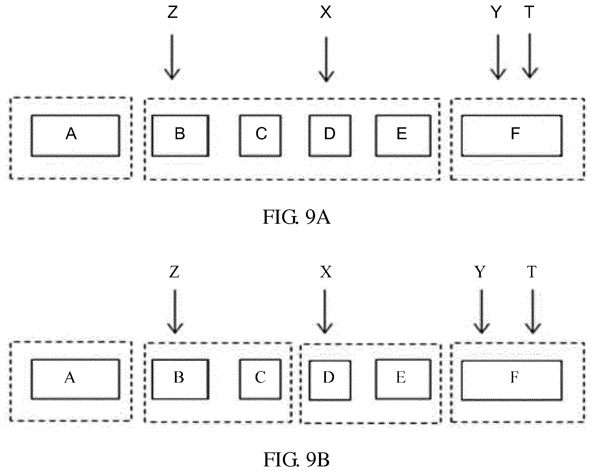

Spreading of the foregoing action D is used as an example. Before the spreading, X, Y, and Z are shown in FIG. 9A. Before the action D is spread, an action set [B, E] is performed on a processor core. A pipeline queue ID of the action B has been set according to a set attribute of the action set [B, E]. After the action D is spread, as shown in FIG. 9B, the pipeline queue ID of the action D needs to be set according to a set attribute of an action set [D, E]. The action D is spread, and an action set performed together with the action B is narrowed to an action set [B, C]. Therefore, the pipeline queue ID of the action B needs to be modified according to a set attribute of the action set [B, C].

It is assumed that, in a topological sequence, the first action that is spread and that follows an action X is Y, the first action that is spread and that precedes X is Z, and an action at a tail of the sequence is T. Folding is performed on the action X, and a folding process is as follows:
(1) Set a pipeline label of the action X to be not spread.
(2) Set a pipeline queue of X to be invalid.
(3) If both Z and Y exist, update a pipeline queue ID of Z according to a set attribute of an action set [Z, Y); if Z exists and Y does not exist, update a pipeline queue ID of Z according to a set attribute of an action set [Z, T].

Referring to the accompanying drawings, FIG. 9B is an initial state, and FIG. 9A is a state obtained after pipeline folding is performed on the action D. After pipeline folding is performed on the action D, an action set performed together with B is expanded from [B, C] to [B, E], so that the pipeline queue ID of the action B needs to be modified.

It should be noted that the foregoing two dynamic pipeline policies are merely examples, and a person skilled in the art may set another dynamic pipeline policy according to a network device and a feature of network traffic. This is not limited in this embodiment of the present invention.

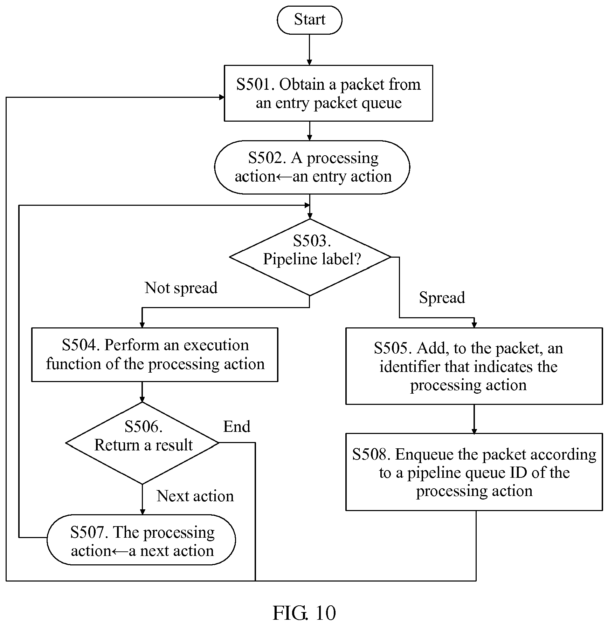

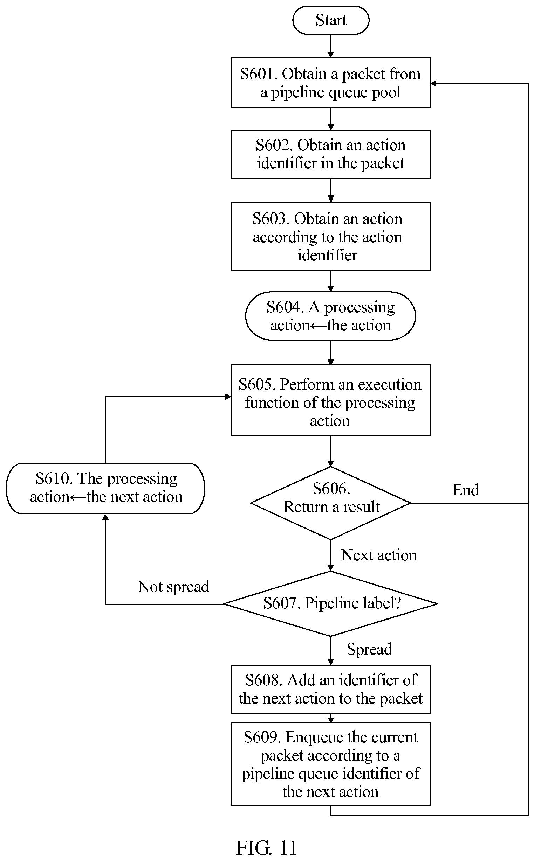

Referring to FIG. 10 and FIG. 11, FIG. 10 and FIG. 11 are respective schematic diagrams of basic processing processes of an entry processing thread 302 and a common processing thread 303.

As shown in FIG. 10, the entry processing thread sequentially obtains a packet from an entry packet queue (S501). Before e ach action (including an entry action) starting from the entry action is performed, whether a corresponding pipeline label indicates that the action is spread is determined.

Specifically, the entry processing thread first determines that the entry action is a current to-be-performed processing action (S502), and determines whether a pipeline label of the processing action indicates that the processing action is spread. If the pipeline label of the processing action indicates that the processing action is spread, the entry processing thread adds, into a packet, an identifier that indicates the processing action (for the packet, the action is an action that needs to be performed next) (S505), and then enqueues the packet into a queue identified by a pipeline queue ID of the processing action (S508), and step S501 is performed again, that is, a next packet is obtained. If the pipeline label of the processing action does not indicate that the processing action is spread, the entry processing thread directly invokes an execution function of the processing action and performs the processing action on the packet (S504), and determines, according to a returned result of the execution function, whether processing performed on the packet is completed (S506). If the processing performed on the packet is not completed (that is, a next action needs to be performed), the next action is then processed, that is, the next action is determined as a current to-be-performed processing action (S507) and step S503 is performed. The next action may be obtained from a returned result of the currently performed action. If the processing performed on the packet is completed, processing performed on a current packet is ended, and step S501 is performed again, that is, a next action is obtained.

As shown in FIG. 11, the common processing thread obtains a packet from each queue in a pipeline queue pool by means of polling, and performs packet processing.

Specifically, the common processing thread first obtains a to-be-processed packet from the pipeline queue pool (S601), obtains an action identifier in the packet (S602), obtains a corresponding processing action according to the action identifier carried in the packet (S603), determines that a current to-be-performed processing action is the processing action (S604), and then performs an execution function of the processing action (S605). The common processing thread determines whether a returned result of the execution function indicates that processing performed on the packet is completed (S606). If the returned result of the execution function indicates that the processing performed on the packet is completed, processing of the current packet is ended and step S601 is performed again, that is, a next packet is obtained and processed. If the returned result of the execution function indicates that the processing performed on the packet is not completed, a next action is obtained according to the returned result, and then a spreading status of a pipeline label of the next action is determined (S607). If the pipeline label of the next action indicates that the next action is spread, the common processing thread sets a next action label of the packet according to the next action (S608), and then enqueues the packet into a queue identified by a pipeline queue ID of the action (S609). If the pipeline label of the next action indicates that the next action is not spread, the common processing thread determines that the next action is a current to-be-performed processing action (S610), and returns to step S605, that is, performs an execution function of the next action.

It should be noted that, in FIG. 10 and FIG. 11, "processing action←action x" means that a value is assigned by the action x to the "processing action". It represents that a to-be-processed action is the action x. In other words, a "processing action" in the following method process is the action x till a value is reassigned to the "processing action". Optionally, whether processing performed on a current packet is completed is determined according to a returned result of an execution function of a processing action, and if the returned result is empty, the processing performed on the current packet is completed, or if the returned result is a next action, the processing performed on the current packet is not completed.

In a processing method of a common processing thread provided in this embodiment of the present invention, the common processing thread obtains a packet from a pipeline queue pool mainly according to three principles: (1) For packets in queues of different priorities, a packet in a queue of a high priority is preferentially processed. (2) Packets in queues of a same priority are processed by means of fair polling. (3) If a queue is a serial queue, the queue can only be processed by one processor core at a same moment, that is, only one common processing thread can perform processing at a same moment on a premise that one core is bound to one processing thread. Certainly, in another embodiment of the present invention, a packet may be obtained by using another type of scheduling policy.

In another aspect, an embodiment of the present invention further provides a pipeline dynamic folding method. That is, on a premise of pipeline spreading, if a computer system determines that a preset pipeline folding condition is met, one or more processing actions that are spread are determined, and the processing actions that are spread are folded. For setting of the preset pipeline folding condition, refer to setting of the foregoing pipeline spreading condition, and details are not described herein again. Folding of a processing action is a reverse process of spreading of the processing action. For details, refer to the foregoing description. A processing process of each thread after folding is the same as a processing process described above. Specific processing actions that are spread may be selected according to a current instruction of a user, or selected according to historical configuration information of a user, or dynamically selected according to a current traffic status. This is not limited in this embodiment of the present invention.

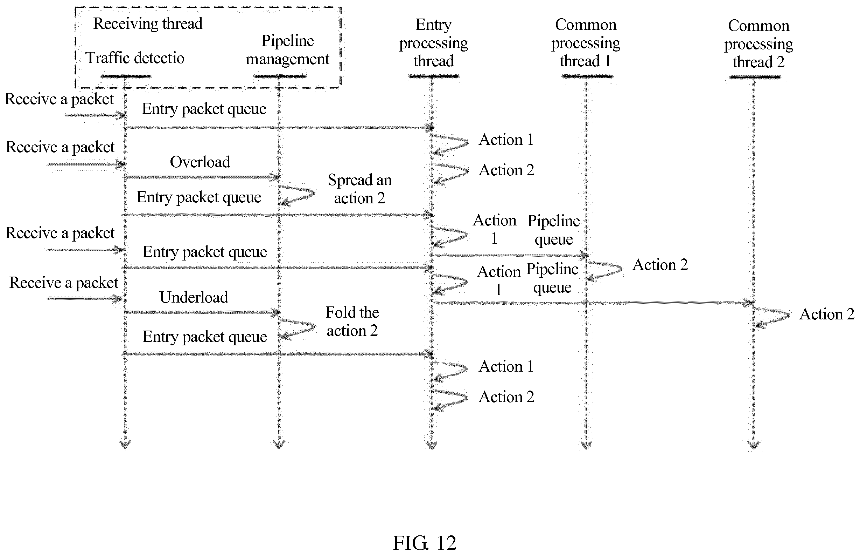

Referring to FIG. 12, FIG. 12 is a schematic diagram of internal interaction of data flow processing according to an embodiment of the present invention. It is assumed that there are two processing actions: an action 1 and an action 2. The action 1 is performed before the action 2. In FIG. 12, packet receiving from an external port is performed four times.

At the first time of packet receiving, a receiving thread does not detect traffic overload, so that no pipeline management is triggered. After a packet is enqueued into an entry packet queue, an entry processing thread obtains the packet from the entry packet queue and performs the action 1 and the action 2.

At the second time of packet receiving, the receiving thread detects traffic overload, and pipeline management is triggered for overload processing. The action 2 is spread in the pipeline management, and then the action 2 is performed on a packet by a common processing thread 1. A spreading manner of the action 2 is described above, and details are not described herein again.

It should be noted that, in this embodiment of the present invention, actually, the common processing thread 1 and a common processing thread 2 equally obtain a packet from a pipeline queue pool. That the packet is obtained by the common processing thread 1 is an example herein, and the packet may also be obtained and processed by the common processing thread 2 in practice.

At the third time of packet receiving, traffic falls in a normal threshold range, and no pipeline management is triggered. The receiving thread forwards, by using the entry packet queue, a packet to the entry processing thread for processing. After performing the action 1 on the packet, the entry processing thread adds a label that indicates the action 2 to the packet, and then enqueues the packet into a pipeline queue corresponding to the action 2. The common processing thread 2 obtains the packet from the pipeline queue pool by means of polling, and performs the action 2 on the packet.

At the fourth time of packet receiving, the receiving thread detects traffic underload, and the pipeline management is triggered to perform underload processing. The action 2 that is spread is folded in the pipeline management. Because the action 2 is folded, both the action 1 and the action 2 are processed by the entry processing thread.

An embodiment of the present invention further provides a method for dynamically increasing or decreasing a pipeline processing resource. That is, when a quantity of processing actions that are spread is relatively large but traffic overload still exists, more processing resources are obtained to perform pipeline processing of a packet. However, when most of processing actions are not spread but traffic underload still exists, some current processing resources are released.

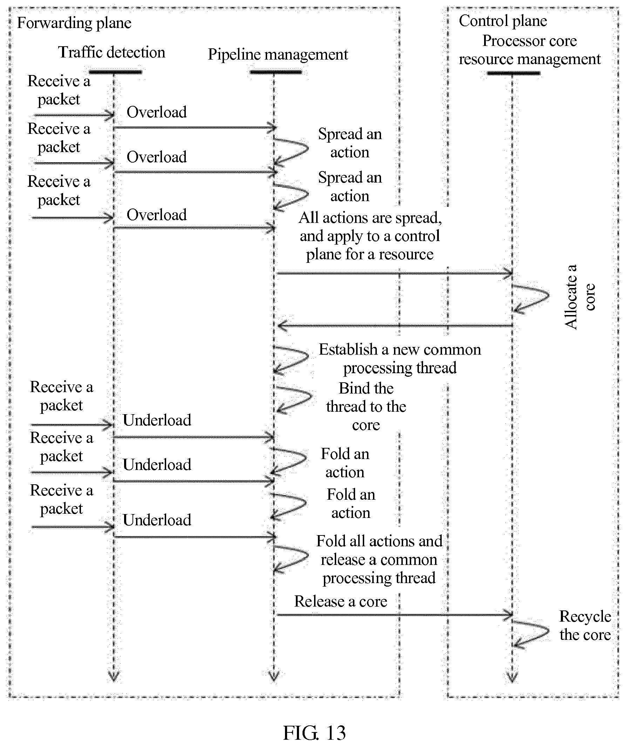

As shown in FIG. 13, a gateway is used as an example. All processing actions (or referred to as forwarding actions) are implemented on a forwarding plane of the gateway, and a control plane is responsible for allocating and recycling a processing resource. After pipeline management in which overload processing has been performed for multiple times, all actions are spread, and if traffic overload still occurs, it indicates that a top limit of a system forwarding capability is reached. In this case, a pipeline management unit applies to the control plane for more processor core resources. One or more control cores that are on the control plane and that are responsible for processor core resource management allocate a new processor core to the forwarding plane. The pipeline management unit establishes, based on the newly allocated processor core, a common processing thread, and binds the common processing thread to a corresponding processor core to perform a processing action that is spread, so as to implement dynamic expansion of the forwarding capability. Opposite to dynamic expansion, after the pipeline management in which underload processing has been performed for multiple times, all actions are folded (that is, pipeline labels indicate that the actions are not spread). In this case, if traffic underload still exists, a redundant common processing thread and a processor core corresponding to the redundant common processing thread are released, and a processing resource recycling request is sent to the control plane. The control plane recycles a corresponding processor core resource according to the request, so as to implement dynamic shrinking of the forwarding capability.

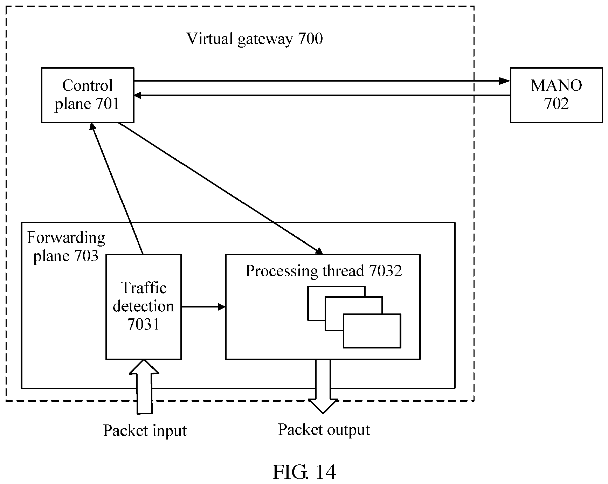

The method provided in this embodiment of the present invention may be applied to a network function virtualization (Network Function Virtualization, NFV) scenario. With reference to NFV, the following describes a method for applying for or recycling a resource. Referring to FIG. 14, in the NFV scenario, a control plane 701 and a forwarding plane 703 may form a virtual network function, for example, a virtual gateway 700. The control plane 701 does not directly allocate a core resource, and an NFV management and orchestration (NFV Management and Orchestration, MANO for short) system 702 allocates a core resource. As shown in FIG. 14, when finding, after performing traffic detection 7031, that core resources are insufficient, the forwarding plane 703 sends a traffic overload message to the control plane 701. The control plane 701 sends a core resource application request to the MANO 702 according to the traffic overload message, and the MANO 702 allocates a core resource according to the core resource application request. A recycling process is similar. After applying for a core resource or recycling a core resource, the forwarding plane 703 performs, under the control of the control plane 701, hot swap on a processor core, and enables or disables a processing thread 7032 corresponding to the processor core on which hot swap is performed (the processing thread 7032 is corresponding to the common processing thread in the foregoing embodiment). The MANO 702 mainly includes an orchestrator (Orchestrator), one or more VNF managers (Virtualized Network Function Manager, VNF Manager), and one or more virtualized infrastructure managers (Virtualized Infrastructure Manager). A VNF manager is connected to the virtual network function, and the orchestrator may communicate with one or more VNF managers to implement a resource-related request, and may send configuration information to the VNF manager and collect status information of the virtual network function. The orchestrator may further communicate with the virtualization infrastructure manager to implement resource allocation, and/or implement reservation and exchange of both configuration information and status information of a virtualization hardware resource.

It should be noted that, that a control core is on a control plane is merely an example, and in other embodiments of the present invention, the control core may also share a same logical plane with another processor core (a first processor core and a second processor core), or there is no differentiation between a control plane and another plane in a computer system, or a control core and a processor core are located in different computer systems. A computer core that can implement a function mentioned in this embodiment of the present invention can be considered as a control core.

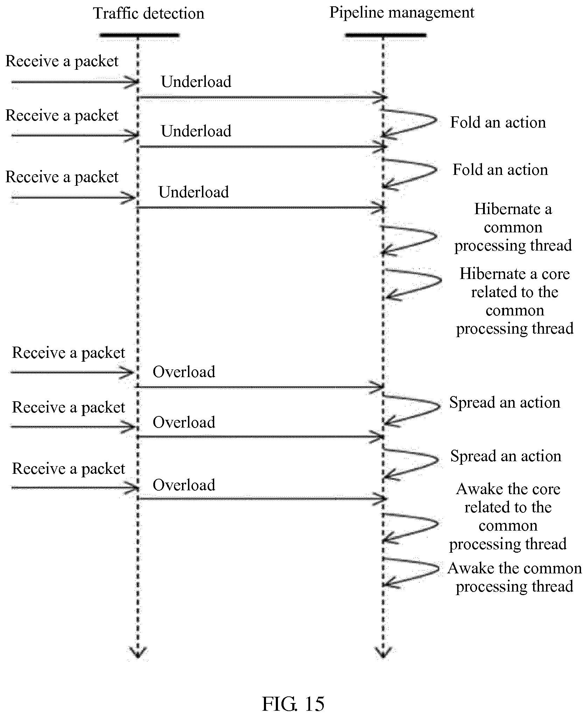

An embodiment of the present invention further provides a method for implementing low power consumption on a forwarding plane. Referring to FIG. 15, a difference from the foregoing embodiments is that when all actions are folded and traffic underload still exists, a pipeline management unit performs low-power processing on a common processing thread. Specifically, the pipeline management unit hibernates processor cores bound to some or all common processing threads (if a processor core is hibernated, a common processing thread bound to the processor core is also hibernated). Alternatively, the pipeline management unit instructs common processor cores bound to some or all common processing threads, to decrease a dominant frequency (when a processor core decreases a dominant frequency, a corresponding thread does not need to be hibernated). In another embodiment of the present invention, low power consumption may also be implemented in another manner. This is not limited in the present invention. When all actions are spread and overload still exists, and processor cores in a low-power state exist, a traffic management unit releases the low-power state of the processor cores. Specifically, the traffic management unit awakes some or all common processor cores and awakes common processing threads bound to the common processor cores, or the traffic management unit instructs a corresponding common processor core to increase a dominant frequency.

It should be noted that a condition involved above is not necessarily that each processing action is spread or folded, and may also be that a quantity of actions that are spread is large or small. For example, the condition is set as follows: A quantity of processing actions that are spread is greater than (for another example, greater than or equal to) a specific threshold, or a quantity of processing actions that are spread is less than (for another example, less than or equal to) a specific threshold (that is, a quantity of processing actions that are not spread is greater than a specific threshold). The thresholds above may be set according to a network device processing capability or another condition. This is not limited in this embodiment of the present invention.

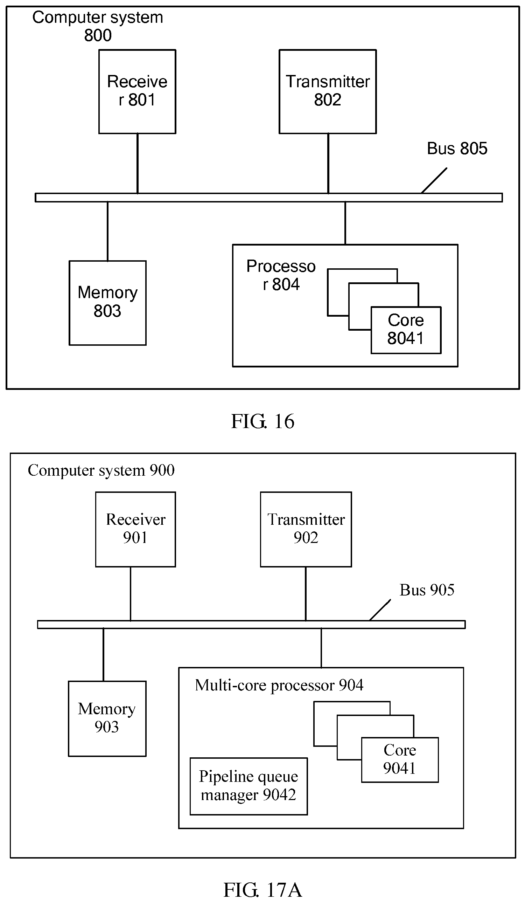

An embodiment of the present invention further provides a computer system, configured to implement the dynamic pipeline method described above. Referring to FIG. 16, a computer system 800 includes a receiver 801, a transmitter 802, a processor 804, and a memory 803 that are connected by using a bus 805. The bus 805 may be an ISA (Industry Standard Architecture, Industry Standard Architecture) bus, a PCI (Peripheral Component, Peripheral Component Interconnect) bus, an EISA (Extended Industry Standard Architecture, Extended Industry Standard Architecture) bus, or the like. The bus 805 may be one or more physical lines, and when the bus 805 is multiple physical lines, the bus 805 may be divided into an address bus, a data bus, a control bus, and the like.

The receiver 801 and the transmitter 802 are respectively configured to receive a packet in a data flow and send a packet that is processed. The memory 803 is configured to store a software program, and the processor 804 is configured to read the software program to implement any dynamic pipeline processing method described above.

In an implementation, the processor 804 is a multi-core processor and includes multiple cores 8041. One or more cores in the multiple cores 8041 are used as first processor cores, and are configured to determine whether a preset pipeline spreading condition is met. If the preset pipeline spreading condition is met, the first processor core determines N processing actions that are not spread, and spreads the N processing actions. Other cores in the multi-core processor are used as second processor cores and are configured to perform the N processing actions that are spread. In some embodiments, in addition to performing a processing action that is spread, the second processor core is also configured to perform a processing action that is not spread. For example, in the embodiment described above, if a processing action B is spread but a processing action C is not spread, B and C are processed by a same second processor core. Cores in the multi-core processor may share one or more storage areas in a memory, and the storage area is configured to cache a to-be-processed packet. Optionally, the storage area may be managed by using multiple queues, and it can be understood that an element enqueued into a queue is actually stored in a storage area corresponding to the queue.

In another implementation, multiple cores in the computer system are located in different processors.

For specific content of the method implemented by the processor 804 provided in this embodiment of the present invention, reference may be made to a related step of a method embodiment described above, and details are not described herein again.

In some embodiments of the present invention, the computer system 800 includes multiple queues corresponding to multiple storage areas, and the computer system 800 needs to implement queue management (enqueuing, dequeuing, queue polling, and the like). If the queue management is implemented by using a software program, queue transfer overheads are very high. The queue transfer overheads include overheads used for packet enqueuing, packet dequeuing, queue polling, and the like.

Therefore, to reduce the queue transfer overheads as much as possible, as shown in FIG. 17A, an embodiment of the present invention further provides another computer system 900. In the computer system, a pipeline queue manager 9042 is implemented by using hardware. Transfer overheads of a packet queue can be better reduced if the dynamic pipeline processing method provided in the present invention is implemented based on the pipeline queue pool manager 9042, so as to further improve data flow processing efficiency. In addition, the computer system 900 further includes a receiver 901, a transmitter 902, a multi-core processor 904, and a memory 903 that are connected by using a bus 905. The multi-core processor 904 includes multiple cores 9041 and the pipeline queue manager 9042.

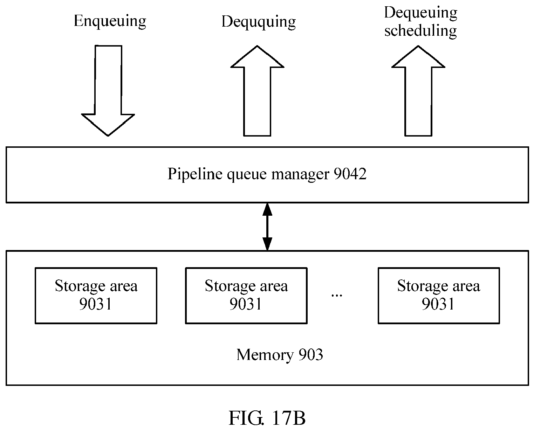

Referring to FIG. 17B, to enable each processor core to access each queue corresponding to a storage area, the pipeline queue manager 9042 needs to provide three external interfaces: (1) an enqueuing interface: configured to enqueue batches of packets into a specified queue; (2) a dequeuing interface: configured to dequeue batches of packets from a specified queue; and (3) a dequeuing scheduling interface: configured to output a packet according to priorities of different queues and according to a scheduling policy configured by a user. For interfaces (2) and (3), only the interface (3) may be preserved.

In some embodiments, storage areas are in a one-to-one correspondence with queues. Multiple storage areas 9031 in the memory 903 may be continuous storage areas, or may be non-continuous storage areas. This is not limited in this embodiment of the present invention.

A multi-core ARM processor is used as an example. An ARM 64 integrates a pipeline queue manager implemented by using hardware. Then, packet processing of a dynamic pipeline is implemented based on the hardware pipeline queue pool manager. Therefore, a data flow processing technology with a low cost and high performance can be constructed. A gateway forwarding plane is used as an example. An ODP (open data plane) is an open-source forwarding plane development library oriented to an ARM domain. The ODP is centered on queue management. Therefore, in combination with the ODP, the hardware-based pipeline queue pool manager can implement, in low costs and with high efficiency, the dynamic pipeline method provided in the present invention.

In conclusion, according to the data flow processing method and the system that are provided in the embodiments of the present invention, a processing process performed on a packet is divided into multiple processing actions. Some processing actions are spread only when traffic of a current data flow meets a preset condition. Therefore, multiple processor cores may process a packet in a pipeline manner, so as to improve processing efficiency. When a bandwidth fluctuation amplitude of a data flow is relatively large and a peek bandwidth of the data flow is relatively large, compared with a static pipeline manner, the method provided in the embodiments of present invention avoids a waste of processing resources to some extent when traffic is relatively low, and can also better support data flow processing when traffic is relatively high.

Further, processor cores in pipeline processing (equivalent to a second processor core) obtain to-be-processed packets from multiple pipeline queues by means of polling, and the processor cores are not statically bound to pipeline queues or processing actions. Therefore, flexibility of the pipeline processing is improved.

Further, all pipeline queues are managed by means of pooling, that is, a pipeline queue pool is established, so that the pipeline queues may be managed by using a dedicated hardware pipeline queue pool manager. The manager directly manages a queue storage area, and packets in all queues are cached in the storage area, and the manager performs operations such as enqueuing, dequeuing, and queue polling, so as to reduce queue transfer overheads of a packet.

In addition, according to a method provided in another embodiment of the present invention, when a preset condition is met, a new processor core may be requested from a control core, to perform pipeline processing. Low-power processing may also be performed on a processor core when a preset condition is met. Therefore, a feature of a large fluctuation amplitude of a data flow can be better adapted, and utilization of a processing resource can be improved.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The described apparatus embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided in the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the foregoing descriptions of the implementations, a person skilled in the art may clearly understand that the apparatus described in the embodiments of present invention may be implemented by software in addition to necessary universal hardware or by dedicated hardware only, where the dedicated hardware includes a dedicated integrated circuit, a dedicated CPU, a dedicated memory, a dedicated component and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data flow processing method, wherein the method is applied to a computer system that comprises multiple processor cores, the computer system is configured to receive a data flow and perform, on a packet in the data flow, M processing actions that are in a sequential order, M is an integer greater than or equal to 2, and the method comprises:
determining, by a first processor core, whether a preset pipeline spreading condition is met; and
if the preset pipeline spreading condition is met, determining, by the first processor core, N processing actions that are not spread, and spreading the N processing actions, so that a second processor core performs the N processing actions that are spread, wherein N is an integer greater than 0 and less than or equal to M.

2. The method according to claim 1, wherein the determining, by the first processor core, N processing actions that are not spread, and spreading the N processing actions, so that a second processor core performs the N processing actions that are spread comprises:
determining, by the first processor core according to a processing action spreading attribute, the N processing actions that are not spread, wherein the spreading attribute is used to indicate whether a processing action with the spreading attribute is spread; and
modifying, by the first processor core, spreading attributes of the N processing actions that are not spread, to indicate that the corresponding processing actions are spread, and transferring, to the second processor core by using a storage area, a packet on which a processing action that is spread is to be performed, so that the second processor core performs, on the packet, the processing action that is spread.

3. The method according to claim 2, wherein the transferring, by the first processor core to the second processor core by using a storage area, a packet on which a processing action that is spread is to be performed, so that the second processor core performs, on the packet, the processing action that is spread comprises:
determining, by the first processor core, a pipeline queue corresponding to each of the N processing actions, so that the first processor core or the second processor core enqueues, into a pipeline queue corresponding to the processing action that is spread, the packet on which the processing action that is spread is to be performed; and obtaining, by the second processor core, the packet from the pipeline queue and performing the processing action corresponding to the pipeline queue on the packet, wherein the pipeline queue is used to store the packet on which the processing action corresponding to the pipeline queue is to be performed.

4. The method according to claim 3, wherein that the first processor core or the second processor core enqueues, into a pipeline queue corresponding to the processing action that is spread, the packet on which the processing action that is spread is to be performed comprises:
determining, by the first processor core or the second processor core, whether a spreading attribute of a to-be-performed processing action of a to-be-processed packet indicates that the to-be-performed processing action is spread; and
if the spreading attribute indicates that the to-be-performed processing action is spread, storing the to-be-processed packet into a pipeline queue corresponding to the to-be-performed processing action, wherein an identifier of the to-be-performed processing action is added to the to-be-processed packet; or
if the spreading attribute indicates that the to-be-performed processing action is not spread, continuing to perform the to-be-performed processing action on the to-be-processed packet.

5. The method according to claim 4, wherein when a current processor core is the first processor core, performing the determining step respectively before the current processor core performs each processing action.

6. The method according to claim 4, wherein when a current processor core is the first processor core, performing the determining step respectively before the current processor core performs an entry action and each subsequent processing action of the entry action, and the entry action is a preset processing action that instructs to start the determining step.

7. The method according to claim 4, wherein when a processor core is the second processor core, the processor core performs the determining step after completing a processing action for the first time and before performing any subsequent processing action.

8. The method according to any one of claims 3 to 7, wherein the processing action spreading attribute comprises a pipeline queue identifier, and when the pipeline queue identifier is null or an invalid value, it indicates that a processing action is not spread, and when the pipeline queue identifier is a valid identifier, it indicates that a processing action is spread; and
the modifying, by the first processor core, spreading attributes of the N processing actions to indicate that the corresponding processing actions are spread comprises:
separately setting, by the first processor core, pipeline queue identifiers of the N processing actions to identifiers of pipeline queues respectively corresponding to the N processing actions.

9. The method according to any one of claims 1 to 8, wherein the N processing actions that are not spread comprise all subsequent actions that are not spread and that are of any processing action in the N processing actions, and a subsequent action of a processing action is performed after the processing action is completed.

10. The method according to any one of claims 3 to 9, wherein the pipeline queue comprises a parallel pipeline queue and a serial pipeline queue, a packet stored in the serial pipeline queue can be processed by only one processor core at a same moment, and a packet stored in the parallel pipeline queue can be simultaneously processed by multiple processor cores.

11. The method according to claim 10, wherein the pipeline queue that is determined by the first processor core and that corresponds to each of the N processing actions needs to meet the following conditions:
a parallel pipeline queue corresponds to one or more processing actions that can be simultaneously processed by multiple processor cores; and a serial pipeline queue corresponds to one processing action that cannot be simultaneously processed by multiple processor cores.

12. The method according to claim 11, wherein a processing action further comprises a parallel attribute, the parallel attribute is used to indicate whether the processing action can be simultaneously processed by multiple processor cores, and the first processor core determines, according to the parallel attribute, whether the processing action can be simultaneously processed by multiple processor cores.

13. The method according to any one of claims 3 to 12, wherein a processing action further comprises a priority attribute, the priority attribute is used to indicate a priority of the processing action, and different pipeline queues have different priorities; and
the pipeline queue that is determined by the first processor core and that corresponds to each of the N processing actions needs to meet the following condition: a priority of the pipeline queue corresponding to each processing action matches a priority of the corresponding processing action.

14. The method according to any one of claims 3 to 8, wherein the pipeline queue comprises a parallel pipeline queue and a serial pipeline queue, a packet stored in the serial pipeline queue can be processed by only one processor core at a same moment, and a packet stored in the parallel pipeline queue can be simultaneously processed by multiple processor cores; and
the determining, by the first processor core, a pipeline queue corresponding to each of the N processing actions comprises:
if each processing action in a first action set can be simultaneously processed by multiple processor cores, determining, by the first processor core, that a pipeline queue corresponding to the processing action is a parallel pipeline queue; or if each processing action in a first action set cannot be simultaneously processed by multiple processor cores, determining, by the first processor core, that a pipeline queue corresponding to the processing action is a serial pipeline queue, wherein
the first action set comprises the processing action and all processing actions following the processing action and preceding the first processing action that is spread, and the first processing action that is spread is the first processing action that is spread and that follows the processing action.

15. The method according to claim 14, wherein the pipeline queue that is determined by the first processor core and that corresponds to each of the N processing actions needs to meet the following condition: a priority of the pipeline queue corresponding to each processing action matches a priority of a processing action with a highest priority in the first action set.

16. The method according to claim 13 or 14, wherein if a processing action that is spread and that precedes the first processing action of the N processing actions exists, the method further comprises:
re-determining, according to a second action set, a pipeline queue corresponding to a first processing action, wherein the first processing action is the first processing action that is spread and that precedes the first processing action of the N processing actions, and
the second action set comprises the first processing action and all processing actions following the first processing action and preceding the first processing action of the N processing actions.

17. The method according to any one of claims 3 to 16, wherein the obtaining, by the second processor core, the packet from the pipeline queue and performing the processing action corresponding to the pipeline queue on the packet comprises:
obtaining, by the second processor core, a to-be-processed packet from multiple pipeline queues by means of polling, wherein the to-be-processed packet carries an identifier of a processing action, and the processing action is a processing action corresponding to a pipeline queue that the to-be-processed packet is from; and
performing, by the second processor core, the processing action on the to-be-processed packet according to the identifier of the processing action.

18. The method according to any one of claims 1 to 17, wherein the preset pipeline spreading condition comprises: a quantity of packets stored in an entry packet queue is greater than or equal to a first threshold, wherein the entry packet queue stores a packet that is received by the computer system and on which no processing action is performed.

19. The method according to any one of claims 1 to 17, wherein the preset pipeline spreading condition comprises: a quantity of packets received by the first processor core since previous null receiving is greater than or equal to a second threshold, wherein the null receiving indicates that a quantity of received packets is 0.

20. The method according to any one of claim 1 to 17, wherein the preset pipeline spreading condition comprises: configuration information of a user is received, wherein the configuration information is used to indicate that pipeline spreading needs to be performed, or the configuration information comprises the quantity N of processing actions that need to be spread, or the configuration information comprises identifiers of the N processing actions that need to be spread.

21. The method according to any one of claims 1 to 20, wherein the method further comprises:
determining, by the first processor core, whether a preset pipeline folding condition is met; and
if the preset pipeline folding condition is met, determining, by the first processor core, P processing actions that are spread, and setting the P processing actions to be not spread, wherein P is an integer greater than 0.

22. The method according to any one of claims 1 to 21, wherein the method further comprises:
when determining that the preset pipeline spreading condition is met and that a quantity of processing actions that are spread is greater than the first threshold, sending, by the first processor core, a processing resource application request to a control core, wherein the control core is configured to manage the multiple processor cores; and
allocating, by the control core, one or more third processor cores according to the processing resource application request, to perform the processing actions that are spread.

23. The method according to claim 22, wherein the method further comprises:
when determining that the preset pipeline folding condition is met and that the quantity of processing actions that are spread is less than the second threshold, sending, by the first processor core, a processing resource recycling request to the control core; and
recycling, by the control core, one or more second processor cores according to the processing resource recycling request.

24. The method according to any one of claims 1 to 22, wherein the method further comprises:
performing, by the first processor core, low-power processing on the at least one second processor core when determining that the preset pipeline folding condition is met and that the quantity of processing actions that are spread is less than the second threshold.

25. The method according to claim 24, wherein the low-power processing comprises hibernating at least one second processor core or instructing at least one second processor core to decrease a dominant frequency.

26. A computer system, wherein the computer system is configured to receive a data flow and perform, on a packet in the data flow, M processing actions that are in a sequential order, and M is an integer greater than or equal to 2; and the computer system comprises multiple processor cores, wherein
a first processor core is configured to determine whether a preset pipeline spreading condition is met, and if the preset pipeline spreading condition is met, the first processor core determines N processing actions that are not spread, and spreads the N processing actions; and
a second processor core is configured to perform the N processing actions that are spread, wherein N is an integer greater than 0 and less than or equal to M.

27. The computer system according to claim 26, wherein
the first processor core is configured to: determine the N processing actions that are not spread; spread, by modifying attributes, the N processing actions that are not spread; determine a storage area corresponding to each of the N processing actions; and store, in a storage area corresponding to a processing action that is spread, a packet on which the processing action that is spread is to be performed; and
the second processor core is configured to obtain the packet from the storage area and perform the processing action corresponding to the storage area on the packet.

28. The computer system according to claim 27, wherein in the aspect of storing, in a storage area corresponding to a processing action that is spread, a packet on which the processing action that is spread is to be performed, the first processor core is configured to: determine whether a spreading attribute of a to-be-performed processing action of a to-be-processed packet indicates that the to-be-performed processing action is spread; and if the spreading attribute indicates that the to-be-performed processing action is spread, store the to-be-processed packet into a storage area corresponding to the to-be-performed processing action, wherein an identifier of the to-be-performed processing action is added to the to-be-processed packet; or if the spreading attribute indicates that the to-be-performed processing action is not spread, continue to perform the to-be-performed processing action on the to-be-processed packet.

29. The computer system according to any one of claims 27 to 28, wherein
the second processor core is configured to: obtain a to-be-processed packet from multiple storage areas by means of polling, wherein the to-be-processed packet carries an identifier of a processing action, and the processing action is a processing action corresponding to a storage area that the to-be-processed packet is from; and perform the processing action on the to-be-processed packet according to the identifier of the processing action.

30. The computer system according to any one of claims 26 to 29, wherein the N processing actions that are not spread comprise all subsequent actions that are not spread and that are of any processing action in the N processing actions, and a subsequent action of a processing action is performed after the processing action is completed.

31. The computer system according to claim 30, wherein each storage area is managed by using a pipeline queue corresponding to the storage area; the pipeline queue comprises a parallel pipeline queue and a serial pipeline queue; a packet stored in the serial pipeline queue may be processed by only one processor core at a same moment, and a packet stored in the parallel pipeline queue may be simultaneously processed by multiple processor cores; a pipeline queue that is determined by the first processor core and that corresponds to each of the N processing actions needs to meet the following conditions: a parallel pipeline queue corresponds to one or more processing actions that can be simultaneously processed by multiple processor cores; and a serial pipeline queue corresponds to one processing action that cannot be simultaneously processed by multiple processor cores.

32. The computer system according to any one of claims 26 to 29, wherein each storage area is managed by using a pipeline queue corresponding to the storage area; the pipeline queue comprises a parallel pipeline queue and a serial pipeline queue; a packet stored in the serial pipeline queue can be processed by only one processor core at a same moment; and a packet stored in the parallel pipeline queue can be simultaneously processed by multiple processor cores; and
in an aspect of determining a pipeline queue corresponding to each of the N processing actions, the first processor core is configured to: if each processing action in a first action set can be simultaneously processed by multiple processor cores, determine that a pipeline queue corresponding to the processing action is a parallel pipeline queue; or if each processing action in a first action set cannot be simultaneously processed by multiple processor cores, determine that a pipeline queue corresponding to the processing action is a serial pipeline queue, wherein the first action set comprises the processing action and all processing actions following the processing action and preceding the first processing action that is spread, and the first processing action that is spread is the first processing action that is spread and that follows the processing action.

33. The computer system according to any one of claims 26 to 32, wherein
the first processor core is further configured to: determine whether a preset pipeline folding condition is met; determine P processing actions that are spread if the preset pipeline folding condition is met; and set the P processing actions to be not spread, wherein P is an integer greater than 0.

34. The computer system according to any one of claims 26 to 33, wherein
the first processor core is further configured to: when determining that the preset pipeline spreading condition is met and that a quantity of processing actions that are spread is greater than a first threshold, send a processing resource application request to a control core; and the control core is configured to allocate one or more third processor cores according to the processing resource application request, to perform the processing actions that are spread.

35. The computer system according to claim 34, wherein
the first processor core is further configured to: when determining that the preset pipeline folding condition is met and that the quantity of processing actions that are spread is less than a second threshold, send a processing resource recycling request to the control core; and
the control core is further configured to recycle one or more second processor cores according to the processing resource recycling request.

36. The computer system according to any one of claims 26 to 33, wherein
the first processor core is further configured to perform low-power processing on the at least one second processor core when determining that the preset pipeline folding condition is met and that a quantity of processing actions that are spread is less than a second threshold.

37. The computer system according to any one of claims 26 to 36, wherein the computer system further comprises:
a pipeline queue manager, configured to manage multiple pipeline queues corresponding to the multiple storage areas, and provide an enqueuing interface or a dequeuing interface for the multiple processor cores, so that the processor core enqueues a packet into a pipeline queue by invoking the enqueuing interface or obtains a packet from a pipeline queue by invoking the dequeuing interface.

38. A computer system, wherein the computer system comprises at least one multi-core processor and a memory, the computer system is configured to receive a data flow and perform, on a packet in the data flow, M processing actions that are in a sequential order, and M is an integer greater than or equal to 2, wherein:
the memory is configured to store a software program, and when the software program is executed by any processor core in the multi-core processor, a first processor core in the multi-core processor determines whether a preset pipeline spreading condition is met; if the preset pipeline spreading condition is met, the first processor core determines N processing actions that are not spread, and spreads the N processing actions; and a second processor core in the multi-core processor executes the N processing actions that are spread, wherein N is an integer greater than 0 and less than or equal to M.

39. The computer system according to claim 38, wherein when the software program is executed by any processor core in the multi-core processor, the first processor core determines the N processing actions that are not spread, spreads, by modifying attributes, the N processing actions that are not spread, determines a storage area corresponding to each of the N processing actions, and stores, in a storage area corresponding to a processing action that is spread, a packet on which the processing action that is spread is to be performed; and the second processor core obtains the packet from the storage area and performs the processing action corresponding to the storage area on the packet.

40. The computer system according to claim 39, wherein when the software program is executed by any processor core in the multi-core processor, the first processor core determines whether a spreading attribute of a to-be-performed processing action of a to-be-processed packet indicates that the to-be-performed processing action is spread; and if the spreading attribute indicates that the to-be-performed processing action is spread, stores the to-be-processed packet into a storage area corresponding to the to-be-performed processing action, wherein an identifier of the to-be-performed processing action is added to the to-be-processed packet; or if the spreading attribute indicates that the to-be-performed processing action is not spread, continues to perform the to-be-performed processing action on the to-be-processed packet.

41. The computer system according to any one of claims 38 to 40, wherein when the software program is executed by any processor core in the multi-core processor, the second processor core obtains a to-be-processed packet from multiple storage areas by means of polling, wherein the to-be-processed packet carries an identifier of a processing action, and the processing action is a processing action corresponding to a storage area that the to-be-processed packet is from; and performs the processing action on the to-be-processed packet according to the identifier of the processing action.
